# EUROPÄISCHE PATENTSCHRIFT

(11) **EP 2 304 642 B1**
(45) Veröffentlichungstag und Bekanntmachung des Hinweises auf die Patenterteilung: **12.12.2018**
(21) Anmeldenummer: 09779438.2
(22) Anmeldetag: 11.05.2009
(51) Int. Cl.: G06F 21/34, G06F 21/41, H04L 29/06

(54) **VERFAHREN ZUM LESEN VON ATTRIBUTEN AUS EINEM ID-TOKEN**
METHOD FOR READING ATTRIBUTES FROM AN ID TOKEN
PROCÉDÉ POUR LIRE LES ATTRIBUTS DEPUIS UN JETON ID

(30) Priorität: 15.07.2008 DE 102008040416
(43) Veröffentlichungstag der Anmeldung: 06.04.2011
(73) Patentinhaber: Bundesdruckerei GmbH, 10985 Berlin (DE)
(72) Erfinder: DIETRICH, Frank, 12437 Berlin (DE); PAESCHKE, Dr. Manfred, 16348 Wandlitz (DE)
(74) Vertreter: Richardt Patentanwälte PartG mbB
(86) Internationale Anmeldenummer: PCT/EP2009/055666
(87) Internationale Veröffentlichungsnummer: WO 2010/006822

(56) Entgegenhaltungen:
- US-A1- 2001 045 451
- US-A1- 2003 115 267
- Microsoft Cofporation; Ping Identity Corporation: "An Implementer's Guide to the Identity Selector Interoperability Profile V1.0" 2007, Seiten 1-74, XP002542873 Gefunden im Internet: URL:download.microsoft.com/.../Identity_Se lector_Interoperability_Profile_V1.5_Guide .pdf> [gefunden am 2009-08-25]

## Beschreibung

Die Erfindung betrifft ein Verfahren zum Lesen von zumindest einem Attribut aus einem ID-Token, ein Computerprogrammprodukt, einen ID-Token sowie ein Computersystem.

Aus dem Stand der Technik sind verschiedene Verfahren zur Verwaltung der so genannten digitalen Identität eines Benutzers bekannt:
Microsoft Windows CardSpace ist ein Client-basiertes digitales Identitätssystem, welches es Internetbenutzern ermöglichen soll, deren digitale Identität gegenüber Online-Diensten mitzuteilen. Nachteilig ist hierbei unter anderem, dass der Nutzer seine digitale Identität manipulieren kann.

Bei OPENID handelt es sich dagegen um ein Server-basiertes System. Ein so genannter Identity-Server speichert eine Datenbank mit den digitalen Identitäten der registrierten Nutzer. Nachteilig ist hieran unter anderem ein mangelhafter Datenschutz, da die digitalen Identitäten der Nutzer zentral gespeichert werden und das Nutzerverhalten aufgezeichnet werden kann.

Das Dokument *"*An Implementer's Guide to the Identity Selector Interoperability Profile V1.0", April 2007, Microsoft Corporation und Ping Identity Corporation*,* offenbart ein Verfahren zur Authentifizierung eines Nutzers mittels einer Smartcard. Der Nutzer wird im Laufe dieses Verfahren dazu aufgefordert, seine Smartcard in einen Identity Selector einzuführen und sich mit seiner PIN zu authentifizieren. Anschließend verwendet der Identity Selector ein X.509-Zertifikat von der Smartcard, um sich bei einem weiteren Dienst zu authentifizieren.

Aus US 2007/0294431 A1 ist ein weiteres Verfahren zur Verwaltung der digitalen Identitäten bekannt, welches ebenfalls eine Nutzerregistrierung erfordert.

Aus der US 2001/0045451 A1 ist ein tokenbasiertes Verfahren zur Authentifizierung eines Nutzers gezeigt.

Aus der zum Anmeldezeitpunkt unveröffentlichten Patentanmeldung DE102008000067.1 "Verfahren zum Lesen von Attributen aus einem ID-Token" derselben Anmelderin ist ein Verfahren bekannt, welches es einem ID-Provider Computersystem ermöglicht ein oder mehrere Attribute aus dem ID-Token eines Nutzers auszulesen, um diese an ein Dienst-Computersystem weiterzuleiten.

Der Erfindung liegt demgegenüber die Aufgabe zugrunde, ein verbessertes Verfahren zum Lesen zumindest eines Attributs zu schaffen, sowie ein entsprechendes Computerprogrammprodukt, einen ID-Token und ein Computersystem.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben.

Nach Ausführungsformen der Erfindung wird ein Verfahren zum Lesen zumindest eines in einem ID-Token gespeicherten Attributs geschaffen, wobei der ID-Token einem Nutzer zugeordnet ist. Das Verfahren beinhaltet die folgenden Schritte: Senden einer Anforderung von einem vierten Nutzer-Computersystem an ein zweites Dienst-Computersystem, Spezifizierung eines oder mehrerer Attribute durch das zweite Dienst-Computersystem, Senden der Attributspezifizierung von dem zweiten Dienst-Computersystem an ein drittes Computersystem, Weiterleitung der Attributspezifizierung von dem dritten Computersystem an ein erstes Computersystem, Authentifizierung des Nutzers gegenüber dem ID-Token, Authentifizierung eines ersten Computersystems gegenüber dem ID-Token, nach erfolgreicher Authentifizierung des Nutzers und des ersten Computersystems gegenüber dem ID-Token, Lesezugriff des ersten Computersystems auf das zumindest eine in dem ID-Token gespeicherte Attribut, Signierung des zumindest einen aus dem ID-Token gelesenen Attributs durch das erste Computersystem, Übertragung des signierten Attributs von dem ersten Computersystem an das zweite Dienst-Computersystem, wobei die Authentifizierung des ersten Computersystems (136') gegenüber dem ID-Token aufgrund einer Attributspezifizierung (166, 168') erfolgt, die das erste Computersystem von einem dritten Computersystem (136) empfängt, wobei die Attributspezifikation das zumindest eine Attribut spezifiziert, wobei der Lesezugriff des ersten Computersystems erfolgt, um die in der Attributspezifizierung spezifizierten ein oder mehrere Attribute aus dem ID-Token auszulesen.

Hierdurch kann ein "Vertrauensanker" geschaffen werden.

Die Erfindung ermöglicht das Lesen eines oder mehrerer der in einem ID-Token gespeicherten Attribute durch das erste Computersystem, wobei die Verbindung zwischen dem ID-Token und dem ersten Computersystem über ein Netzwerk, insbesondere das Internet, aufgebaut werden kann. Bei dem zumindest einem Attribut kann es sich um eine Angabe bezüglich der Identität des dem ID-Token zugeordneten Nutzers handeln, insbesondere bezüglich dessen so genannter digitaler Identität. Beispielsweise werden durch das erste Computersystem die Attribute Name, Vorname, Adresse gelesen, um diese Attribute an ein zweites Computersystem, zum Beispiel eines Online-Dienstes, weiterzuleiten.

Es kann aber zum Beispiel auch nur ein einzelnes Attribut gelesen werden, welches nicht zur Feststellung der Identität des Nutzers, sondern beispielsweise zur Überprüfung der Berechtigung des Benutzers zur Inanspruchnahme eines bestimmten Online-Dienstes dient, wie zum Beispiel das Alter des Nutzers, wenn dieser einen Online-Dienst in Anspruch nehmen möchte, der einer bestimmten Altersgruppe vorbehalten ist, oder ein anderes Attribut, welches die Zugehörigkeit des Nutzers zu einer bestimmten Gruppe dokumentiert, welche zur Nutzung des Online-Dienstes berechtigt ist.

Bei dem ID-Token kann es sich um ein tragbares elektronisches Gerät, wie zum Beispiel einen so genannten USB-Stick, handeln oder um ein Dokument, insbesondere ein Wert- oder Sicherheitsdokument.

Unter einem "Dokument" werden erfindungsgemäß papierbasierte und/oder kunststoffbasierte Dokumente verstanden, wie zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Bankkarten und Kreditkarten, Frachtbriefe oder sonstige Berechtigungsnachweise, in die ein Datenspeicher zur Speicherung des zumindest einen Attributs integriert ist.

Ausführungsformen der Erfindung sind also besonders vorteilhaft, da das zumindest eine Attribut aus einem besonders vertrauenswürdigen Dokument, beispielsweise einem amtlichen Dokument, ausgelesen wird. Von besonderem Vorteil ist weiterhin, dass eine zentrale Speicherung der Attribute nicht erforderlich ist. Die Erfindung ermöglicht also ein besonders hohes Maß an Vertrauenswürdigkeit hinsichtlich der Mitteilung der zu einer digitalen Identität gehörenden Attribute, verbunden mit einem optimalen Datenschutz bei äußerst bequemer Handhabung.

Bezüglich des ID-Tokens sind erste und zweite Mengen von ID-Provider-Computersystemen definiert, welche prinzipiell gleich aufgebaut sein können, aber über unterschiedliche Rechte verfügen: Die erste Menge der ID-Provider-Computersysteme ist für das zweite Computersystem als vertrauenswürdig definiert, hat aber keine Leserechte zum Lesen des zumindest einen Attributs aus dem ID-Token. Bei dem zweiten Computersystem handelt es sich zum Beispiel um ein Dienst-Computersystem, welches zur Bereitstellung eines Dienstes für die Nutzer dient.

Die zweite Menge der ID-Provider-Computersysteme ist bezüglich des ID-Tokens und/oder des vierten Computersystems, d.h. des Nutzer-Computersystems, als vertrauenswürdig definiert, hat also Leserechte auf das zumindest eine Attribut des ID-Tokens. Durch die ersten und zweiten Mengen von ID-Provider-Computersystemen werden hier so genannte Bestätigungsdomänen definiert. Beispielsweise gehören das Dienst-Computersystem und das dritte Computersystem zu derselben Bestätigungsdomäne, wohingegen das vierte Computersystem, d. h. das Nutzer-Computersystem, und das erste Computersystem zu einer anderen, davon verschiedenen Bestätigungsdomäne gehören.

Zumindest eine Teilmenge der zweiten Menge von ID-Provider-Computersystemen ist aber für zumindest eine Teilmenge der ersten Menge von ID-Provider-Computersystemen als vertrauenswürdig definiert, wobei die Teilmengen jeweils ungleich der leeren Menge sind.

Wenn also eine Attributspezifizierung von dem Dienst-Computersystem durch das Nutzer-Computersystem empfangen wird, so leitet das Nutzer-Computersystem die Attributspezifizierung an ein ID-Provider-Computersystem der Teilmenge der ersten Menge weiter. Dieses ID-Provider-Computersystem der Teilmenge der ersten Menge leitet die Attributspezifizierung an ein ID-Provider-Computersystem der Teilmenge der zweiten Menge weiter, welches von dem ID-Provider-Computersystem der Teilmenge der ersten Menge als vertrauenswürdig eingestuft ist.

Das ID-Provider-Computersystem der Teilmenge der zweiten Menge liest dann nach vorheriger Authentifizierung das zumindest eine Attribut aus dem ID-Token des Benutzers aus. Von diesem ID-Provider-Computersystem der Teilmenge der zweiten Menge wird das zumindest eine Attribut an das ID-Provider-Computersystem der Teilmenge der ersten Menge gesendet, von wo aus das zumindest eine Attribut an das Dienst-Computersystem weitergeleitet wird. Optional wird das zumindest eine Attribut von dem ID-Provider-Computersystem der Teilmenge der ersten Menge zunächst an das Nutzer-Computersystem weitergeleitet, von wo aus das zumindest eine Attribut dann das Dienst-Computersystem weitergeleitet wird.

Vorzugsweise wird das zumindest eine Attribut von dem ID-Provider-Computersystem der Teilmenge der zweiten Menge in Form einer signierten Nachricht an das ID-Provider-Computersystem der Teilmenge der ersten Menge gesendet. Das ID-Provider-Computersystem der Teilmenge der ersten Menge kann die Signatur überprüfen. Wenn die Signatur valide ist und als von einem zu der Teilmenge der zweiten Menge gehörenden ID-Provider-Computersystem erkannt wird, so signiert das ID-Provider-Computersystem der Teilmenge der ersten Menge seinerseits das zumindest eine Attribut und leitet eine entsprechende Nachricht an das Dienst-Computersystem weiter. Das Dienst-Computersystem kann dann die Validität der Signatur prüfen und der Authentizität des zumindest einen Attributs vertrauen, da die Signatur von dem als vertrauenswürdig eingestuften ID-Provider-Computersystems der Teilmenge der ersten Menge erzeugt worden ist.

Ausführungsformen der Erfindung sind besonders vorteilhaft, da sie einen medienbruchfreien und rechtssicheren elektronischen Rechtsverkehr über die Grenzen von Bestätigungsdomänen hinweg ermöglichen.

Ausführungsformen der Erfindung sind ferner besonders vorteilhaft, da eine Registrierung des Nutzers zur Inanspruchnahme des von dem Dienst-Computersystem zur Verfügung gestellten Dienstes nicht erforderlich ist. Aufgrund des "statuslosen" Charakters der durch die ID-Provider-Computersysteme erbrachten ID-Bestätigungsleistung, d. h. des Lesens des zumindest einen Attributs, ist es nicht notwendig, dass sich der Nutzer zuvor bei einem der ID-Provider-Computersysteme authentifiziert hat. Dabei ist ferner besonders vorteilhaft, dass in den ID-Provider-Computersystemen keine nutzerbezogenen Daten gespeichert werden müssen.

Nach einer Ausführungsform der Erfindung hat das erste Computersystem zumindest ein Zertifikat, welches zur Authentifizierung des ersten Computersystems gegenüber dem ID-Token verwendet wird. Das Zertifikat beinhaltet eine Angabe derjenigen Attribute, für welche das erste Computersystem eine Leseberechtigung hat. Der ID-Token prüft anhand dieses Zertifikats, ob das erste Computersystem die erforderliche Leseberechtigung für den Lesezugriff auf das Attribut hat, bevor ein solcher Lesezugriff durch das erste Computersystem durchgeführt werden kann.

Nach einer Ausführungsform der Erfindung sendet das erste Computersystem das zumindest eine von dem ID-Token ausgelesene Attribut an das dritte Computersystem, welches das ausgelesene Attribut an das zweite Computersystem weiterleitet. Bei dem zweiten Computersystem kann es sich zum Beispiel um einen Server zur Erbringung eines Online-Dienstes oder eines sonstigen Dienstes, wie zum Beispiel einer Bankdienstleistung oder zur Bestellung eines Produkts handeln. Beispielsweise kann der Nutzer ein Konto online eröffnen, wozu Attribute, die die Identität des Nutzers beinhalten, von dem ersten Computersystem an das zweite Computersystem einer Bank übertragen werden.

Nach einer Ausführungsform der Erfindung erfolgt die Übertragung der aus dem ID-Token gelesenen Attribute von dem ersten Computersystem zunächst an ein viertes Computersystem des Nutzers, d.h. das Nutzer-Computersystem. Beispielsweise hat das vierte Computersystem einen üblichen Internetbrowser, mit dem der Nutzer eine Webseite des zweiten Computersystems öffnen kann. Der Nutzer kann in die Webseite eine Anforderung oder Bestellung für einen Dienst oder ein Produkt eingeben.

Das zweite Computersystem spezifiziert daraufhin diejenigen Attribute, zum Beispiel des Nutzers oder seines ID-Tokens, welche es für die Erbringung des Dienstes oder die Annahme der Bestellung benötigt. Die entsprechende Attributspezifizierung, die die Spezifizierung dieser Attribute beinhaltet, wird sodann von dem zweiten Computersystem an das erste Computersystem gesendet. Dies kann mit oder ohne Zwischenschaltung des vierten Computersystems erfolgen. Im letzteren Fall kann der Nutzer das gewünschte erste Computersystem gegenüber dem zweiten Computersystem spezifizieren, beispielsweise durch Eingabe der URL des ersten Computersystems in eine Webseite des zweiten Computersystems von dem vierten Computersystem aus.

Nach einer Ausführungsform der Erfindung beinhaltet die Dienst-Anforderung des Nutzers an das zweite Computersystem die Angabe eines Identifikators, wobei der Identifikator das erste Computersystem identifiziert. Beispielsweise handelt es sich bei dem Identifikator um einen Link, beispielsweise eine URL des ersten Computersystems.

Nach einer Ausführungsform der Erfindung wird die Attributspezifizierung nicht unmittelbar von dem zweiten Computersystem an das erste Computersystem gesendet, sondern zunächst von dem zweiten Computersystem an das vierte Computersystem. Das vierte Computersystem hat mehrere vordefinierte Konfigurationsdatensätze, wobei jeder der Konfigurationsdatensätze eine Teilmenge der Attribute, zumindest eine Datenquelle und ein erstes Computersystem aus der zweiten Menge von ID-Provider Computersystemen spezifiziert, wobei die Attributspezifizierung von dem zweiten Computersystem zunächst an das vierte Computersystem übertragen wird, sodass mittels des vierte Computersystems zumindest einer der Konfigurationsdatensätze auswählt wird, der eine Teilmenge der Attribute spezifiziert, welche das zumindest eine in der Attributspezifizierung spezifizierte Attribut beinhaltet, und wobei der vierte Computer die Attributspezifizierung an das erste Computersystem weiterleitet, und die Verbindung mit dem durch die Angabe der Datenquelle in dem ausgewählten Konfigurationsdatensatz spezifizierten ID-Token aufgebaut wird.

Nach einer Ausführungsform der Erfindung werden die aus dem ID-Token ausgelesenen Attribute von dem ersten Computersystem signiert und dann an das dritte Computersystem gesendet. Von dem dritten Computersystem werden die Attribute dann an das vierte Computersystem weitergeleitet. Der Nutzer des vierten Computersystems kann die Attribute also lesen, ohne sie jedoch verändern zu können. Erst nach Freigabe durch den Nutzer werden die Attribute von dem vierten Computersystem an das zweite Computersystem weitergeleitet.

Nach einer Ausführungsform der Erfindung kann der Nutzer die Attribute vor deren Weiterleitung durch weitere Daten ergänzen.

Nach einer Ausführungsform der Erfindung hat das erste Computersystem mehrere Zertifikate mit verschiedenen Leserechten. Aufgrund des Empfangs der Attributspezifizierung wählt das erste Computersystem eines oder mehrere dieser Zertifikate aus, um die entsprechenden Attribute aus dem ID-Token oder mehreren verschiedenen ID-Token auszulesen.

Nach einer Ausführungsform der Erfindung hat das vierte Computersystem zumindest einen Konfigurationsdatensatz, welcher eine externe Datenquelle zur Abfrage eines weiteren Attributs von dem vierten Computersystem über das Netzwerk spezifiziert.

Nach einer Ausführungsform der Erfindung erfolgt die Abfrage des weiteren Attributs, nachdem das zumindest eine Attribut aus dem ID-Token ausgelesen worden ist, und nachdem das vierte Computersystem das zumindest eine Attribut von dem ersten Computersystem empfangen hat, wobei die Abfrage das zumindest eine Attribut beinhaltet.

In einem weiteren Aspekt betrifft die Erfindung ein Computerprogrammprodukt, insbesondere ein digitales Speichermedium, mit ausführbaren Programminstruktionen zur Durchführung eines erfindungsgemäßen Verfahrens.

In einem weiteren Aspekt betrifft die Erfindung einen ID-Token mit einem geschützten Speicherbereich zur Speicherung von zumindest einem Attribut und zumindest einem Identifikators eines ersten Computersystems, mit Mitteln zur Authentifizierung eines dem ID-Token zugeordneten Nutzers gegenüber dem ID-Token, Mitteln zur Authentifizierung eines ersten Computersystems gegenüber dem ID-Token, Mitteln zum Aufbau einer geschützten Verbindung zu dem ersten Computersystem, über die das erste Computersystem das zumindest eine Attribut auslesen kann, wobei eine notwendige Voraussetzung für das Auslesen des zumindest einen Attributs aus dem ID-Token durch das erste Computersystem die erfolgreiche Authentifizierung des Nutzers und des ersten Computersystems gegenüber dem ID-Token ist.

Nach Ausführungsformen der Erfindung wird durch den oder die Identifikatoren die zweite Menge von ID-Provider Computersystemen definiert.

Zusätzlich zu der Authentifizierung des ersten Computersystems gegenüber dem ID-Token, wie sie an sich zum Beispiel als so genannte Extended Access Control für maschinenlesbare Reisedokumente (machine-readable travel documents - MRTD) bekannt und von der internationalen Luftfahrtbehörde ICAO spezifiziert ist, muss sich also der Nutzer gegenüber dem ID-Token authentifizieren. Beispielsweise wird durch eine erfolgreiche Authentifizierung des Nutzers gegenüber dem ID-Token dieser freigeschaltet, sodass die weiteren Schritte, nämlich die Authentifizierung des ersten Computersystems gegenüber dem ID-Token und/oder der Aufbau einer geschützten Verbindung zum Auslesen der Attribute, ablaufen können.

Nach einer Ausführungsform der Erfindung hat der ID-Token Mittel für eine Ende-zu-Ende-Verschlüsselung. Dies ermöglicht es, die Verbindung zwischen dem ID-Token und dem ersten Computersystem über ein drittes Computersystem des Nutzers aufzubauen, da der Nutzer aufgrund der Ende-zu-Ende-Verschlüsselung keine Änderungen der über die Verbindung übertragenen Daten vornehmen kann.

Nach einer Ausführungsform der Erfindung beinhaltet der ID-Token Mittel zur Ende-zu-Ende-Verschlüsselung der Verbindung für eine geschützte Übertragung des zumindest einen der Attribute zu dem ersten Computersystem, wobei es sich bei dem ID-Token vorzugsweise um ein elektronisches Gerät, insbesondere einen USB-Stick, oder ein Dokument, insbesondere ein Wert- oder Sicherheitsdokument, handelt.

In einem weiteren Aspekt betrifft die Erfindung ein erstes Computersystem mit Mitteln zum Empfang einer Attributspezifizierung über ein Netzwerk von einem nicht autorisierten Computersystem (136), wobei die Attributspezifizierung zumindest ein Attribut spezifiziert, Mitteln zur Authentifizierung gegenüber einem ID-Token, Mitteln zum Lesen zumindest einen Attributs aus dem ID-Token über eine gesicherte Verbindung, wobei das Lesen des zumindest einen Attributs voraussetzt, dass sich ein dem ID-Token zugeordneter Nutzer gegenüber dem ID-Token authentifiziert hat, und Mitteln zur Weiterleitung des zumindest einen Attributs an das nicht autorisierte Computersystem.

Nach Ausführungsformen der Erfindung handelt es sich bei dem nicht autorisierten Computersystem um ein ID-Provider Computersystem der ersten Menge, insbesondere um das dritte Computersystem.

Nach einer Ausführungsform der Erfindung kann das erste Computersystem Mittel zur Generierung einer Aufforderung an den Benutzer beinhalten. Nachdem das erste Computersystem die Attributspezifizierung beispielsweise von dem zweiten Computersystem über das dritte Computersystem empfangen hat, sendet es daraufhin eine Aufforderung an das vierte Computersystem des Nutzers, sodass der Nutzer dazu aufgefordert wird, sich gegenüber dem ID-Token zu authentifizieren. Nachdem die Authentifizierung des Nutzers gegenüber dem ID-Token erfolgreich durchgeführt worden ist, erhält das erste Computersystem von dem vierten Computersystem eine Bestätigung. Daraufhin authentifiziert sich das erste Computersystem gegenüber dem ID-Token und es wird eine sichere Verbindung zwischen dem ID-Token und dem ersten Computersystem mit einer Ende-zu-Ende-Verschlüsselung aufgebaut.

Nach einer Ausführungsform der Erfindung hat das erste Computersystem mehrere Zertifikate, die jeweils unterschiedliche Leserechte spezifizieren. Nach Empfang der Attributspezifizierung wählt das erste Computersystem zumindest eines dieser Zertifikate mit den zum Lesen der spezifizierten Attribute ausreichenden Leserechten.

Ausführungsformen des erfindungsgemäßen ersten Computersystems sind besonders vorteilhaft, da sie in Kombination mit der Notwendigkeit der Authentifizierung des Nutzers gegenüber dem ID-Token einen Vertrauensanker für die unverfälschte digitale Identität des Nutzers bilden. Hierbei ist von besonderem Vorteil, dass dies keine vorherige Registrierung des Nutzers gegenüber dem Computersystem erfordert sowie auch keine zentrale Speicherung der die digitalen Identitäten bildenden Attribute der Nutzer.

Nach einer Ausführungsform der Erfindung empfängt das erste Computersystem zusammen mit der Attributspezifizierung einen Identifikator des zweiten Computersystems. Mit Hilfe des Identifikators identifiziert das Computersystem das zweite Computersystem, welches die Identifikationsdienste in Anspruch nehmen möchte, um diese Dienstleistung gegenüber dem zweiten Computersystem zu vergebühren. Alternativ oder zusätzlich empfängt das erste Computersystem zusammen mit der Attributspezifizierung einen Identifikator des dritten Computersystems. Mit Hilfe des Identifikators identifiziert das Computersystem das dritte Computersystem, welches die Identifikationsdienste in Anspruch nehmen möchte, um diese Dienstleistung gegenüber dem dritten Computersystem zu vergebühren. Das dritte Computersystem kann diese Gebühr des ersten Computersystems an das zweite Computersystem, d.h. den Erbringer des Dienstes, weiterbelasten.

Nach einer Ausführungsform der Erfindung handelt es sich bei dem Computersystem um ein behördlich zertifiziertes Trust-Center, insbesondere ein Signaturgesetzkonformes Trust-Center.

Im Weiteren werden Ausführungsformen der Erfindung mit Bezugnahme auf die Zeichnungen näher erläutert. Es zeigen:
- Figur 1: ein Blockdiagramm einer ersten Ausführungsform eines erfindungsgemäßen ID-Tokens,
- Figur 2: ein Flussdiagramm einer Ausführungsform eines erfindungsgemäßen Verfahrens,
- Figur 3: ein Blockdiagramm weiterer Ausführungsformen erfindungsgemäßer Computersysteme,
- Figur 4: ein UML-Diagramm einer weiteren Ausführungsform eines erfindungsgemäßen Verfahrens.

Elemente der nachfolgenden Ausführungsformen, die einander entsprechen, werden mit denselben Bezugszeichen gekennzeichnet.

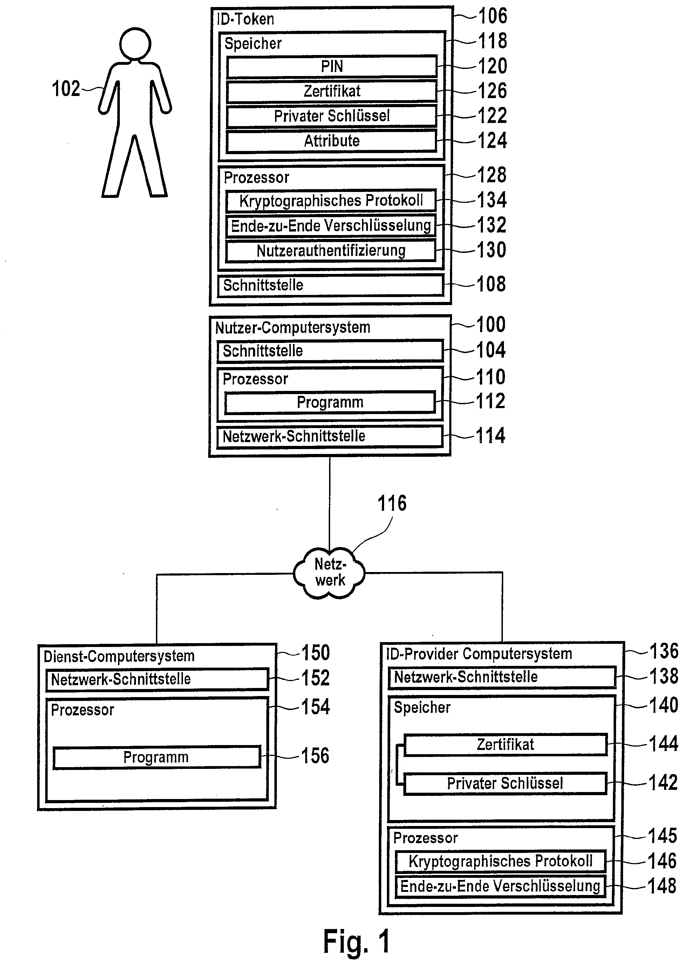

Die Figur 1 zeigt ein Nutzer-Computersystem 100 eines Nutzers 102. Bei dem Nutzer-Computersystem 100 kann es sich um einen Personalcomputer, einen tragbaren Computer, wie zum Beispiel einen Laptop oder Palmtop-Computer, einen Personal Digital Assistant, ein mobiles Telekommunikationsgerät, insbesondere ein Smart Phone, oder dergleichen handeln. Das Nutzer-Computersystem 100 hat eine Schnittstelle 104 zur Kommunikation mit einem ID-Token 106, der eine entsprechende Schnittstelle 108 aufweist.

Das Nutzer-Computersystem 100 hat zumindest einen Prozessor 110 zur Ausführung von Programminstruktionen 112 sowie eine Netzwerk-Schnittstelle 114 zur Kommunikation über ein Netzwerk 116. Bei dem Netzwerk kann es sich um ein Computernetzwerk, wie zum Beispiel das Internet, handeln.

Der ID-Token 106 hat einen elektronischen Speicher 118 mit geschützten Speicherbereichen 120, 122 und 124. Der geschützte Speicherbereich 120 dient zur Speicherung eines Referenzwerts, der für die Authentifizierung des Nutzers 102 gegenüber dem ID-Token 106 benötigt wird. Bei diesem Referenzwert handelt es sich beispielsweise um eine Kennung, insbesondere eine so genannte Personal Identification Number (PIN), oder um Referenzdaten für ein biometrisches Merkmal des Nutzers 102, welches für die Authentifizierung des Nutzers gegenüber dem ID-Token 106 verwendet werden kann.

Der geschützte Bereich 122 dient zur Speicherung eines privaten Schlüssels und der geschützte Speicherbereich 124 dient zur Speicherung von Attributen, zum Beispiel des Nutzers 102, wie zum Beispiel dessen Name, Wohnort, Geburtsdatum, Geschlecht, und/oder von Attributen, die den ID-Token selbst betreffen, wie zum Beispiel die Institution, die den ID-Token erstellt oder ausgegeben hat, die Gültigkeitsdauer des ID-Tokens, einen Identifikator des ID-Tokens, wie zum Beispiel eine Passnummer oder eine Kreditkartennummer.

Der elektronische Speicher 118 kann ferner einen Speicherbereich 126 zur Speicherung eines Zertifikats aufweisen. Das Zertifikat beinhaltet einen öffentlichen Schlüssel, der dem in dem geschützten Speicherbereich 122 gespeicherten privaten Schlüssel zugeordnet ist. Das Zertifikat kann nach einem Public Key Infrastruktur (PKI) Standard erstellt worden sein, beispielsweise nach dem X.509 Standard.

Das Zertifikat muss nicht zwangsläufig in dem elektronischen Speicher 118 des ID-Tokens 106 gespeichert sein. Alternativ oder zusätzlich kann das Zertifikat auch in einem öffentlichen Verzeichnisserver gespeichert sein.

Der ID-Token 106 hat einen Prozessor 128. Der Prozessor 128 dient zur Ausführung von Programminstruktionen 130, 132 und 134. Die Programminstruktionen 130 dienen zur Nutzerauthentifizierung, d.h. zur Authentifizierung des Nutzers 102 gegenüber dem ID-Token.

Der ID-Token kann ferner einen Speicherbereich (in der Fig. 1 nicht gezeigt) aufweisen, der zur Speicherung von zumindest einem Identifikator zur Identifizierung eines ID-Provider Computersystems der zweiten Menge dient. Zumindest eine Teilmenge der zweiten Menge der ID-Provider Computersysteme ist bezüglich des Dienst-Computersystems 150 als nicht vertrauenswürdig definiert, ist aber bezüglich des ID-Tokens 106 hinsichtlich zumindest eines der Attribute leseberechtigt.

Bei einer Ausführungsform mit PIN gibt der Nutzer 102 seine PIN zu seiner Authentifizierung in den ID-Token 106 ein, beispielsweise über das Nutzer-Computersystem 100. Durch Ausführung der Programminstruktionen 130 wird dann auf den geschützten Speicherbereich 120 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 102 als authentifiziert.

Alternativ wird ein biometrisches Merkmal des Nutzers 102 erfasst. Beispielsweise hat der ID-Token 106 hierzu einen Fingerabdrucksensor oder ein Fingerabdrucksensor ist an das Nutzer-Computersystem 100 angeschlossen. Die von dem Nutzer 102 erfassten biometrischen Daten werden durch Ausführung der Programminstruktionen 130 bei dieser Ausführungsform mit den in dem geschützten Speicherbereich 120 gespeicherten biometrischen Referenzdaten verglichen. Bei hinreichender Übereinstimmung der von dem Nutzer 102 erfassten biometrischen Daten mit den biometrischen Referenzdaten gilt der Nutzer 102 als authentifiziert.

Die Programminstruktionen 134 dienen zur Ausführung der den ID-Token 106 betreffenden Schritte eines kryptographischen Protokolls zur Authentifizierung eines ID-Provider-Computersystems 136 gegenüber dem ID-Token 106. Bei dem kryptographischen Protokoll kann es sich um ein Challenge-Response-Protokoll basierend auf einem symmetrischen Schlüssel oder einem asymmetrischen Schlüsselpaar handeln.

Beispielsweise wird durch das kryptographische Protokoll ein Extended Access Control-Verfahren implementiert, wie es für maschinenlesbare Reisedokumente (machine-readable travel documents - MRTD) von der internationalen Luftfahrtbehörde (ICAO) spezifiziert ist. Durch erfolgreiche Ausführung des kryptographischen Protokolls authentifiziert sich das ID-Provider-Computersystem 136 gegenüber dem ID-Token und weist dadurch seine Leseberechtigung zum Lesen der in dem geschützten Speicherbereich 124 gespeicherten Attribute nach. Die Authentifizierung kann auch gegenseitig sein, d.h. auch der ID-Token 106 muss sich dann gegenüber dem ID-Provider-Computersystem 136 nach demselben oder einem anderen kryptographischen Protokoll authentifizieren.

Die Programminstruktionen 132 dienen zur Ende-zu-Ende-Verschlüsselung von zwischen dem ID-Token 106 und dem ID-Provider-Computersystem 136 übertragenen Daten, zumindest aber der von dem ID-Provider-Computersystem 136 aus dem geschützten Speicherbereich 124 ausgelesenen Attribute. Für die Ende-zu-Ende-Verschlüsselung kann ein symmetrischer Schlüssel verwendet werden, der beispielsweise anlässlich der Ausführung des kryptographischen Protokolls zwischen dem ID-Token 106 und dem ID-Provider-Computersystem 136 vereinbart wird.

Alternativ zu der in der Figur 1 dargestellten Ausführungsform kann das Nutzer-Computersystem 100 mit seiner Schnittstelle 104 nicht unmittelbar mit der Schnittstelle 108 kommunizieren, sondern über ein an die Schnittstelle 104 angeschlossenes Lesegerät für den ID-Token 106. Über dieses Lesegerät, wie zum Beispiel einen so genannten Klasse 2-Chipkarten-Terminal, kann auch die Eingabe der PIN erfolgen.

Das ID-Provider-Computersystem 136 hat eine Netzwerk-Schnittstelle 138 zur Kommunikation über das Netzwerk 116. Das ID-Provider-Computersystem 136 hat ferner einen Speicher 140, in dem ein privater Schlüssel 142 des ID-Provider-Computersystems 136 sowie das entsprechende Zertifikat 144 gespeichert ist. Auch bei diesem Zertifikat kann es sich beispielsweise um ein Zertifikat nach einem PKI-Standard, wie zum Beispiel X.509 handeln.

Das ID-Provider-Computersystem 136 hat ferner zumindest einen Prozessor 145 zur Ausführung von Programminstruktionen 146 und 148. Durch Ausführung der Programminstruktionen 146 werden die das ID-Provider-Computersystem 136 betreffende Schritte des kryptographischen Protokolls ausgeführt. Insgesamt wird also das kryptographische Protokoll durch Ausführung der Programminstruktionen 134 durch den Prozessor 128 des ID-Tokens 106 sowie durch Ausführung der Programminstruktionen 146 durch den Prozessor 145 des ID-Provider-Computersystems 136 implementiert.

Die Programminstruktionen 148 dienen zur Implementierung der Ende-zu-Ende-Verschlüsselung auf Seiten des ID-Provider-Computersystems 136, beispielsweise basierend auf dem symmetrischen Schlüssel, der anlässlich der Ausführung des kryptographischen Protokolls zwischen dem ID-Token 106 und dem ID-Provider-Computersystem 136 vereinbart worden ist. Prinzipiell kann jedes an sich vor bekannte Verfahren zur Vereinbarung des symmetrischen Schlüssels für die Ende-zu-Ende-Verschlüsselung verwendet werden, wie zum Beispiel ein Diffie-Hellman-Schlüsselaustausch.

Das ID-Provider-Computersystem 136 befindet sich vorzugsweise in einer besonders geschützten Umgebung, insbesondere in einem so genannten Trust-Center, sodass das ID-Provider-Computersystem 136 in Kombination mit der Notwendigkeit der Authentifizierung des Nutzers 102 gegenüber dem ID-Token 106 den Vertrauensanker für die Authentizität der aus dem ID-Token 106 ausgelesenen Attribute bildet.

Ein Dienst-Computersystem 150 kann zur Entgegennahme einer Bestellung oder eines Auftrags für eine Dienstleistung oder ein Produkt, insbesondere eine Online-Dienstleistung, ausgebildet sein. Beispielsweise kann der Nutzer 102 online über das Netzwerk 116 ein Konto bei einer Bank eröffnen oder eine andere Finanz- oder Bankdienstleistung in Anspruch nehmen. Das Dienst-Computersystem 150 kann auch als Online-Warenhaus ausgebildet sein, sodass der Benutzer 102 beispielsweise online ein Mobiltelefon oder dergleichen erwerben kann. Ferner kann das Dienst-Computersystem 150 auch zur Lieferung von digitalen Inhalten ausgebildet sein, beispielsweise für den Download von Musik- und/oder Videodaten.

Das Dienst-Computersystem 150 hat hierzu eine Netzwerk-Schnittstelle 152 zur Verbindung mit dem Netzwerk 116. Ferner hat das Dienst-Computersystem 150 zumindest einen Prozessor 154 zur Ausführung von Programminstruktionen 156. Durch Ausführung der Programminstruktionen 156 werden beispielsweise dynamische HTML-Seiten generiert, über die der Nutzer 102 seinen Auftrag oder seine Bestellung eingeben kann.

Je nach der Art des beauftragten oder bestellten Produkts oder der Dienstleistung muss das Dienst-Computersystem 150 ein oder mehrere Attribute des Nutzers 102 und/oder dessen ID-Token 106 anhand eines oder mehrerer vorgegebener Kriterien überprüfen. Nur wenn diese Prüfung bestanden wird, wird die Bestellung oder der Auftrag des Nutzers 102 entgegengenommen und/oder ausgeführt.

Beispielsweise ist es für die Eröffnung eines Bankkontos oder den Kauf eines Mobiltelefons mit einem dazugehörigen Vertrag erforderlich, dass der Nutzer 102 seine Identität gegenüber dem Dienst-Computersystem 150 offenbart, und dass diese Identität überprüft wird. Im Stand der Technik muss der Nutzer 102 hierzu beispielsweise seinen Personalausweis vorlegen. Dieser Vorgang wird durch das Auslesen der digitalen Identität des Nutzers 102 aus seinem ID-Token 106 ersetzt.

Je nach Anwendungsfall muss der Nutzer 102 aber nicht seine Identität gegenüber dem Dienst-Computersystem 150 offenbaren, sondern es reicht die Mitteilung, zum Beispiel nur eines der Attribute aus. Beispielsweise kann der Nutzer 102 über eines der Attribute einen Nachweis erbringen, dass er zu einer bestimmten Personengruppe gehört, die zugangsberechtigt für auf dem Dienst-Computersystem 150 zum Download bereitgehaltener Daten ist. Beispielsweise kann ein solches Kriterium ein Mindestalter des Nutzers 102 sein oder die Zugehörigkeit des Nutzers 102 zu einem Personenkreis, der auf bestimmte vertrauliche Daten eine Zugriffsberechtigung hat.

Zur Inanspruchnahme des von dem Dienst-Computersystem 150 zur Verfügung gestellten Dienstes wird wie folgt vorgegangen:
1. Authentifizierung des Nutzers 102 gegenüber dem ID-Token 106.
   Der Nutzer 102 authentifiziert sich gegenüber dem ID-Token 106. Bei einer Implementierung mit PIN gibt der Nutzer 102 hierzu seine PIN beispielsweise über das Nutzer-Computersystem 100 oder einen daran angeschlossenen Chipkarten-Terminal ein. Durch Ausführung der Programminstruktionen 130 prüft dann der ID-Token 106 die Korrektheit der eingegebenen PIN. Wenn die eingegebene PIN mit dem in dem geschützten Speicherbereich 120 gespeicherten Referenzwert der PIN übereinstimmt, so gilt der Nutzer 102 als authentifiziert. Analog kann vorgegangen werden, wenn ein biometrisches Merkmal des Nutzers 102 zu dessen Authentifizierung verwendet wird, wie oben beschrieben.
2. Authentifizierung des ID-Provider-Computersystems 136 gegenüber dem ID-Token 106.
   Hierzu wird eine Verbindung zwischen dem ID-Token 106 und dem ID-Provider-Computersystem 136 über das Nutzer-Computersystem 100 und das Netzwerk 116 hergestellt. Beispielsweise überträgt das ID-Provider-Computersystem 136 sein Zertifikat 144 über diese Verbindung an den ID-Token 106. Durch die Programminstruktionen 134 wird dann eine so genannte Challenge generiert, d.h. beispielsweise eine Zufallszahl. Diese Zufallszahl wird mit dem in dem Zertifikat 144 beinhalteten öffentlichen Schlüssel des ID-Provider-Computersystems 136 verschlüsselt. Das resultierende Chiffrat wird von dem ID-Token 106 über die Verbindung an das ID-Provider-Computersystem 136 gesendet. Das ID-Provider-Computersystem 136 entschlüsselt das Chiffrat mit Hilfe seines privaten Schlüssels 142 und erhält so die Zufallszahl. Die Zufallszahl sendet das ID-Provider-Computersystem 136 über die Verbindung an den ID-Token 106 zurück. Durch Ausführung der Programminstruktionen 134 wird dort geprüft, ob die von dem ID-Provider-Computersystem 136 empfangene Zufallszahl mit der ursprünglich generierten Zufallszahl, d.h. der Challenge, übereinstimmt. Ist dies der Fall, so gilt das ID-Provider-Computersystem 136 als gegenüber dem ID-Token 106 authentifiziert. Die Zufallszahl kann als symmetrischer Schlüssel für die Ende-zu-Ende Verschlüsselung verwendet werden.
3. Nachdem sich der Nutzer 102 erfolgreich gegenüber dem ID-Token 106 authentifiziert hat, und nachdem sich das ID-Provider-Computersystem 136 erfolgreich gegenüber dem ID-Token 106 authentifiziert hat, erhält das ID-Provider-Computersystem 136 eine Leseberechtigung zum Auslesen, eines, mehrerer oder aller der in dem geschützten Speicherbereich 124 gespeicherten Attribute. Aufgrund eines entsprechenden Lesekommandos, welches das ID-Provider-Computersystem 136 über die Verbindung an den ID-Token 106 sendet, werden die angeforderten Attribute aus dem geschützten Speicherbereich 124 ausgelesen und durch Ausführung der Programminstruktionen 132 verschlüsselt. Die verschlüsselten Attribute werden über die Verbindung an das ID-Provider-Computersystem 136 übertragen und dort durch Ausführung der Programminstruktionen 148 entschlüsselt. Dadurch erhält das ID-Provider-Computersystem 136 Kenntnis der aus dem ID-Token 106 ausgelesenen Attribute.
   Diese Attribute werden von dem ID-Provider-Computersystem mit Hilfe seines Zertifikats 144 signiert und über das Nutzer-Computersystem 100 oder direkt an das Dienst-Computersystem 150 übertragen. Dadurch wird das Dienst-Computersystem 150 über die aus dem ID-Token 106 ausgelesenen Attribute in Kenntnis gesetzt, sodass das Dienst-Computersystem 150 diese Attribute anhand der vorgegebenen ein oder mehreren Kriterien prüfen kann, um danach ggf. den von dem Benutzer 102 angeforderten Dienst zu erbringen.

Durch die Notwendigkeit der Authentifizierung des Nutzers 102 gegenüber dem ID-Token 106 und der Authentifizierung des ID-Provider-Computersystems 136 gegenüber dem ID-Token 106 ist der notwendige Vertrauensanker geschaffen, sodass das Dienst-Computersystem 150 sicher sein kann, dass die ihm von dem ID-Provider-Computersystem 136 mitgeteilten Attribute des Nutzers 102 zutreffend und nicht verfälscht sind.

Je nach Ausführungsform kann die Reihenfolge der Authentifizierung unterschiedlich sein. Beispielsweise kann vorgesehen sein, dass sich zunächst der Nutzer 102 gegenüber dem ID-Token 106 authentifizieren muss und nachfolgend das ID-Provider-Computersystem 136. Es ist aber grundsätzlich auch möglich, dass sich zunächst das ID-Provider-Computersystem 136 gegenüber dem ID-Token 106 authentifizieren muss und erst nachfolgend der Nutzer 102.

In dem ersten Fall ist der ID-Token 106 beispielsweise so ausgebildet, dass er nur durch Eingabe einer korrekten PIN oder eines korrekten biometrischen Merkmals durch den Nutzer 102 freigeschaltet wird. Erst diese Freischaltung ermöglicht den Start der Programminstruktionen 132 und 134 und damit die Authentifizierung des ID-Provider-Computersystems 136.

Im zweiten Fall ist ein Start der Programminstruktionen 132 und 134 auch bereits möglich, wenn sich der Nutzer 102 noch nicht gegenüber dem ID-Token 106 authentifiziert hat. In diesem Fall sind beispielsweise die Programminstruktionen 134 so ausgebildet, dass das ID-Provider-Computersystem 136 erst dann einen Lesezugriff auf den geschützten Speicherbereich 124 zum Auslesen eines oder mehrerer der Attribute durchführen kann, nachdem von den Programminstruktionen 130 die erfolgreiche Authentifizierung auch des Nutzers 102 signalisiert worden ist.

Von besonderem Vorteil ist die Nutzbarmachung des ID-Tokens 106 für zum Beispiel E-Commerce und E-Government-Anwendungen, und zwar medienbruchfrei und rechtssicher aufgrund des durch die Notwendigkeit der Authentifizierung des Nutzers 102 und des ID-Provider-Computersystems 136 gegenüber dem ID-Token 106 gebildeten Vertrauensankers. Von besonderem Vorteil ist ferner, dass eine zentrale Speicherung der Attribute verschiedener Nutzer 102 nicht erforderlich ist, sodass die im Stand der Technik bestehenden Datenschutzprobleme hiermit gelöst sind. Was die Bequemlichkeit der Anwendung des Verfahrens betrifft, ist von besonderem Vorteil, dass eine vorherige Registrierung des Nutzers 102 zur Inanspruchnahme des ID-Provider-Computersystems 136 nicht erforderlich ist.

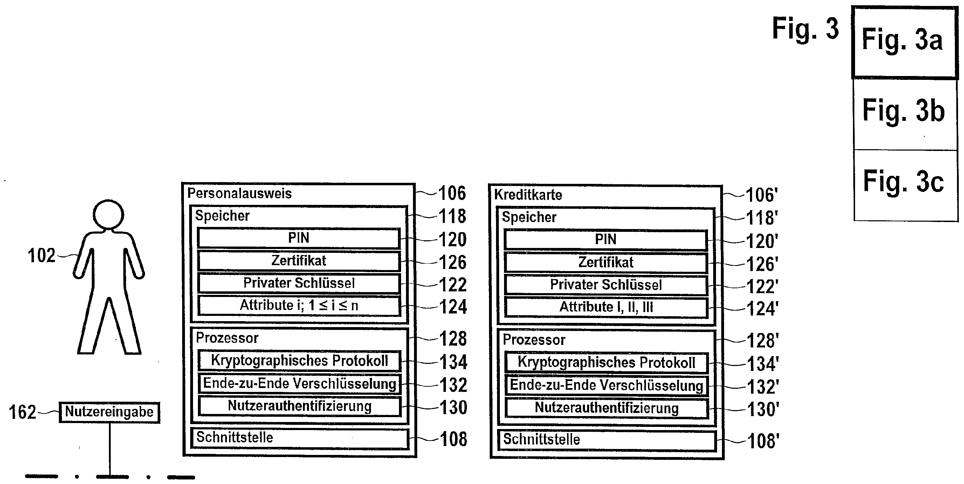

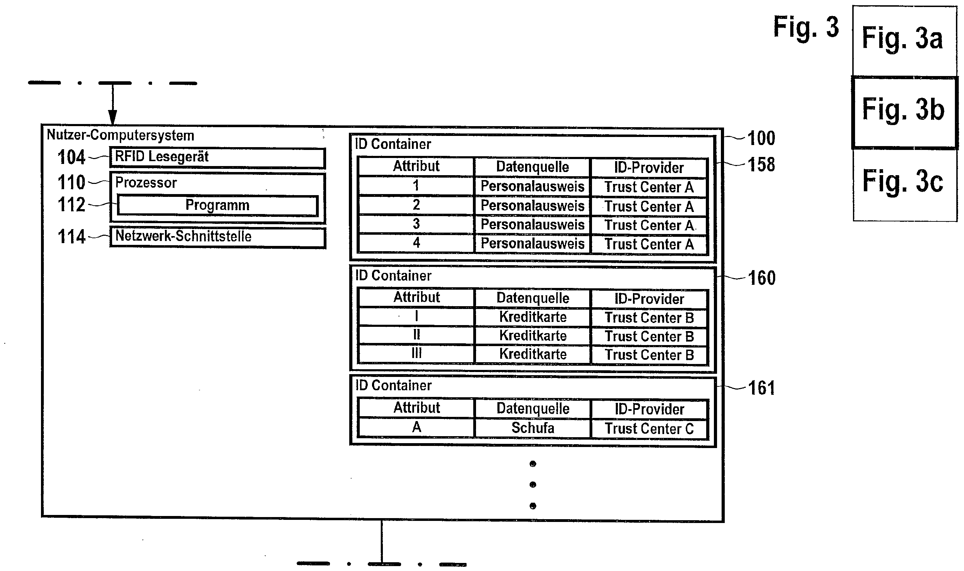

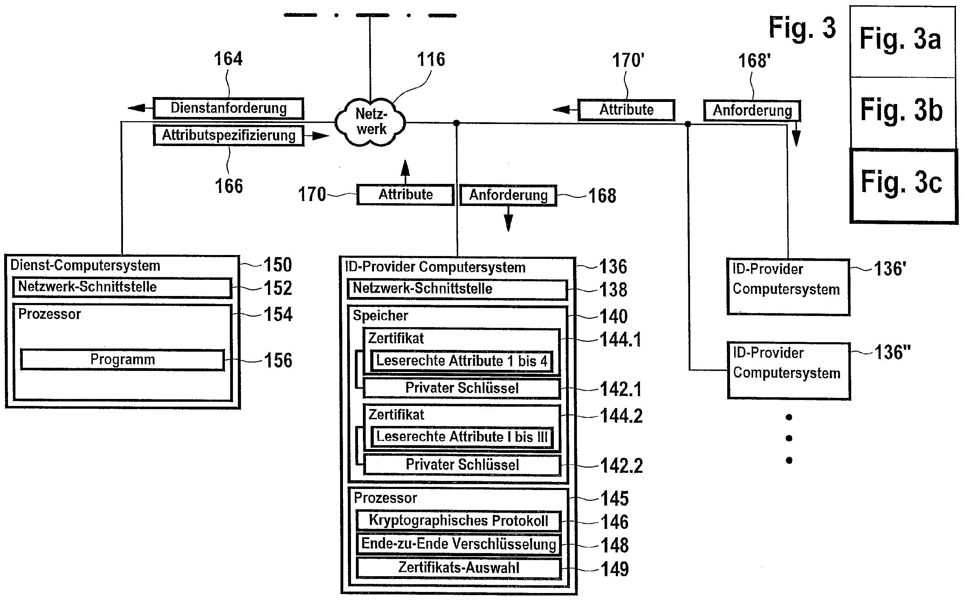

In der hier betrachteten Ausführungsform ist kein Identifikator für das ID-Provider Computersystem 136 in dem Speicher des ID-Tokens gespeichert. Dementsprechend verfügt das ID-Provider Computersystem 136 auch nicht über Leserechte zum Lesen der Attribute aus dem ID-Token. Allerdings ist in dem Speicher des ID-Tokens ein Identifikator für ein ID-Provider Computersystem 136' gespeichert (vgl. Fig. 3), welches prinzipiell gleich aufgebaut ist wie das ID-Provider Computersystem 136 und über Leserechte zum Lesen der Attribute aus dem ID-Token verfügt.

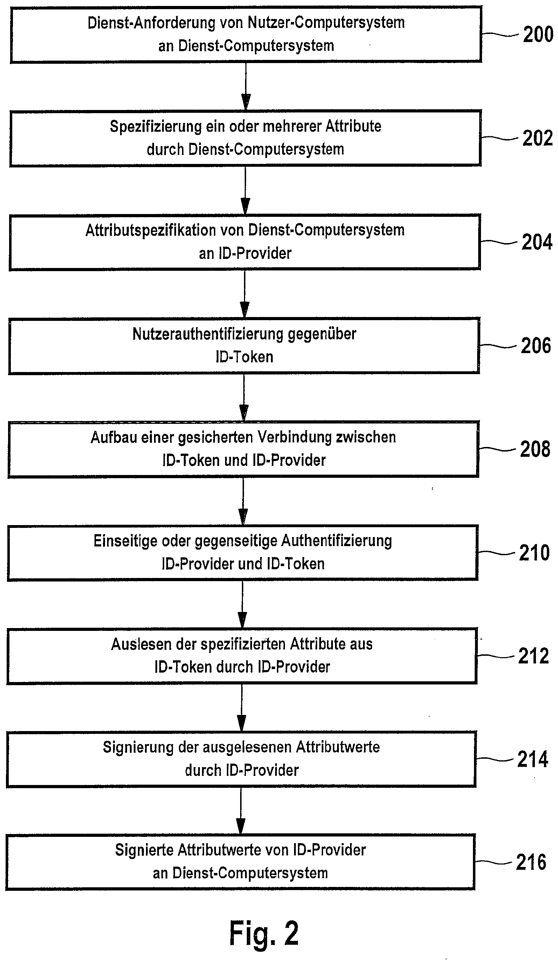

Die Figur 2 zeigt eine Ausführungsform eines erfindungsgemäßen Verfahrens. In dem Schritt 200 wird eine Dienst-Anforderung von dem Nutzer-Computersystem an das Dienst-Computersystem gesendet. Beispielsweise startet der Nutzer hierzu einen Internet-Browser des Nutzer-Computersystems und gibt eine URL zum Aufruf einer Webseite des Dienst-Computersystems ein. In die aufgerufene Webseite gibt der Nutzer dann seine Dienst-Anforderung ein, zum Beispiel zur Bestellung oder Auftragserteilung für einen Dienst oder ein Produkt.

In dem Schritt 202 spezifiziert das Dienst-Computersystem 150 daraufhin ein oder mehrere Attribute, welche es benötigt, um die Berechtigung des Nutzers für die Dienst-Anforderung zu prüfen. Insbesondere kann das Dienst-Computersystem solche Attribute spezifizieren, welche die digitale Identität des Nutzers 102 bestimmen. Diese Spezifizierung der Attribute durch das Dienst-Computersystem 150 kann fest vorgegeben sein oder je nach der Dienst-Anforderung im Einzelfall durch das Dienst-Computersystem 150 anhand vorgegebener Regeln bestimmt werden.

In dem Schritt 204 wird die Attributspezifizierung, d.h. die in dem Schritt 202 erfolgte Spezifizierung der ein oder mehreren der Attribute, von dem Dienst-Computersystem an das ID-Provider-Computersystem übertragen, und zwar entweder direkt oder über das Nutzer-Computersystem.

Um dem ID-Provider-Computersystem die Möglichkeit zu geben, Attribute aus seinem ID-Token auszulesen, authentifiziert sich der Nutzer in dem Schritt 206 gegenüber dem ID-Token.

In dem Schritt 208 wird eine Verbindung zwischen dem ID-Token und dem ID-Provider-Computersystem aufgebaut. Hierbei handelt es sich vorzugsweise um eine gesicherte Verbindung, beispielsweise nach einem so genannten Secure Messaging-Verfahren.

In dem Schritt 210 erfolgt zumindest eine Authentifizierung des ID-Provider-Computersystems gegenüber dem ID-Token über die in dem Schritt 208 aufgebaute Verbindung. Zusätzlich kann eine Authentifizierung auch des ID-Tokens gegenüber dem ID-Provider-Computersystem vorgesehen sein.

Nachdem sowohl der Nutzer als auch das ID-Provider-Computersystem erfolgreich gegenüber dem ID-Token authentifiziert worden sind, erhält das ID-Provider-Computersystem von dem ID-Token die Zugriffsberechtigung zum Auslesen der Attribute. In dem Schritt 212 sendet das ID-Provider-Computersystem ein oder mehrere Lesekommandos zum Auslesen der gemäß Attributspezifizierung erforderlichen Attribute aus dem ID-Token. Die Attribute werden dann mittels Ende-zu-Ende-Verschlüsselung über die gesicherte Verbindung an das ID-Provider-Computersystem übertragen und dort entschlüsselt.

Die ausgelesenen Attributwerte werden in dem Schritt 214 von dem ID-Provider-Computersystem signiert. In dem Schritt 216 sendet das ID-Provider-Computersystem die signierten Attributwerte über das Netzwerk. Die signierten Attributwerte erreichen das Dienst-Computersystem entweder direkt oder über das Nutzer-Computersystem. Im letzteren Fall kann der Nutzer die Möglichkeit haben, die signierten Attributwerte zur Kenntnis zu nehmen und/oder durch weitere Daten zu ergänzen. Es kann vorgesehen sein, dass die signierten Attributwerte gegebenenfalls mit den ergänzten Daten erst nach Freigabe durch den Nutzer von dem Nutzer-Computersystem an das Dienst-Computersystem weitergeleitet werden. Hierdurch ist größtmögliche Transparenz für den Nutzer hinsichtlich der von dem ID-Provider-Computersystem an das Dienst-Computersystem gesendeten Attribute hergestellt.

Wenn das ID-Provider Computersystem zu einer Schnittmenge der ersten und zweiten Mengen gehört, ist keine weitere Aktion erforderlich, da ein solches ID-Provider Computersystem zu beiden Bestätigungsdomänen gehört. Wenn dies nicht der Fall ist, wird die Attributspezifizierung in dem Schritte 204 an ein ID-Provider Computersystem der ersten Menge gesendet, und von dort an ein ID-Provider Computersystem der zweiten Menge weitergeleitet. Durch das ID-Provider Computersystem der zweiten Menge werden dann die Schritte 208 bis 216 erbracht. Die Sendung der signierten Attributwerte von dem ID-Provider Computersystem der zweiten Menge an das Dienst-Computersystem kann über das ID-Provider Computersystem der ersten Menge erfolgen.

Die Figur 3 zeigt weitere Ausführungsformen eines erfindungsgemäßen ID-Tokens und erfindungsgemäße Computersysteme. Bei der Ausführungsform der Figur 3 ist der ID-Token 106 als Dokument ausgebildet, wie zum Beispiel als papier- und/oder kunststoffbasiertes Dokument mit einem integrierten elektronischen Schaltkreis, durch den die Schnittstelle 108, der Speicher 118 und der Prozessor 128 gebildet werden. Bei dem integrierten elektronischen Schaltkreis kann es sich beispielsweise um ein so genanntes Funketikett handeln, welches auch als RFID-Tag oder RFID-Label bezeichnet wird. Die Schnittstelle 108 kann aber auch kontaktbehaftet oder als so genanntes Dual Mode Interface ausgebildet sein.

Insbesondere kann es sich bei dem Dokument 106 um ein Wert- oder Sicherheitsdokument handeln, wie zum Beispiel um ein maschinenlesbares Reisedokument (MRTD), wie zum Beispiel einen elektronischen Reisepass oder einen elektronischen Personalausweis, oder um ein Zahlungsmittel, wie zum Beispiel eine Kreditkarte.

In dem geschützten Speicherbereich 124 sind bei der hier betrachteten Ausführungsform die Attribute i gespeichert, wobei 1 ≤ i ≤ n ist. Im Weiteren wird ohne Beschränktheit der Allgemeinheit davon ausgegangen, dass es sich bei dem in der Figur 3 exemplarisch gezeigten ID-Token 106 um einen elektronischen Personalausweis handelt. Beispielsweise handelt es sich bei dem Attribut i = 1 um den Namen, bei dem Attribut i = 2 um den Vornamen, bei dem Attribut i = 3 um die Adresse und bei dem Attribut i = 4 um das Geburtsdatum, etc.

Die Schnittstelle 104 des Nutzer-Computersystems 100 kann bei der hier betrachteten Ausführungsform als RFID-Lesegerät ausgebildet sein, welches einen integralen Bestandteil des Nutzer-Computersystems bilden kann oder als separate Komponente an dieses angeschlossen sein kann.

Der Nutzer 102 verfügt über einen oder mehrere weitere ID-Token, die prinzipiell gleich aufgebaut sind, wie z.B. einen ID-Token 106', bei dem es sich um eine Kreditkarte handelt.

In dem Nutzer-Computersystem 100 können mehrere Konfigurationsdatensätze 158, 160,... gespeichert sein. Jeder der Konfigurationsdatensätze gibt für eine bestimmte Attributmenge eine Datenquelle und ein ID-Provider-Computersystem an, welches Leserechte zum Lesen der spezifizierten Datenquelle hat. Bei diesem ID-Provider Computersystem handelt es sich also um ID-Provider Computersysteme der zweiten Menge.

Bei der hier betrachteten Ausführungsform kann das Nutzer-Computersystem 100 über das Netzwerk 116 verschiedene ID-Provider-Computersysteme 136, 136', 136"... ansprechen, die jeweils zu verschiedenen so genannten Trust-Centern gehören können. Beispielsweise gehört das ID-Provider-Computersystem 136 zu dem Trust-Center A und das im Prinzip gleich strukturierte ID-Provider-Computersystem 136' zu einem anderen Trust-Center B und das ID-Provider-Computersystem 136" zu einem anderen Trust-Center C. Die ID-Provider-Computersystem 136, 136',136",...können prinzipiell gleich aufgebaut sein, so wie mit Bezug auf das ID-Provider-Computersystem 136 im Detail erläutert. Die ID-Provider-Computersysteme 136, 136', 136",... können sich aber hinsichtlich der Leserechte auf die in den ID-Token 106, 106' gespeicherten Attribute unterschieden, so wie das bei der hier betrachten Ausführungsform der Fall ist.

In dem Konfigurationsdatensatz 158, der auch als ID-Container bezeichnet wird, ist die Attributmenge der Attribute i = 1 bis i = 4 definiert. Diesen Attributen ist jeweils die Datenquelle "Personalausweis", d.h. der ID-Token 106 zugeordnet, sowie das Trust-Center A, d.h. das ID-Provider-Computersystem 136. Dieses kann beispielsweise in Form seiner URL in dem Konfigurationsdatensatz 158 spezifiziert sein.

In dem Konfigurationsdatensatz 116 ist dagegen eine Attributmenge I, II und III definiert. Als Datenquelle für diese Attribute ist jeweils die Kreditkarte, d.h. der ID-Token 106', angegeben. Der ID-Token 106' hat einen geschützten Speicherbereich 124', in dem die Attribute I, II, III, ... gespeichert sind. Bei dem Attribut I kann es sich zum Beispiel um den Namen des Inhabers der Kreditkarte, bei dem Attribut II um die Kreditkartennummer und bei dem Attribut III um die Gültigkeitsdauer der Kreditkarte handeln, etc.

Als ID-Provider-Computersystem ist in dem Konfigurationsdatensatz 160 das ID-Provider-Computersystem 136' des Trust-Centers B angegeben.

Alternativ zu der in der Figur 3 gezeigten Ausführungsform können in demselben Konfigurationsdatensatz für verschiedene Attribute auch verschiedene Datenquellen und/oder verschiedene ID-Provider-Computersysteme angegeben sein.

In der Ausführungsform der Figur 3 kann jedes der ID-Provider-Computersysteme 136, 136',... jeweils mehrere Zertifikate haben.

Beispielsweise sind in dem Speicher 140 des ID-Provider-Computersystems 136, der in der Figur 3 exemplarisch gezeigt ist, mehrere Zertifikate, wie zum Beispiel die Zertifikate 144.1 und 144.2 mit den jeweils zugeordneten privaten Schlüsseln 142.1 und 142.2 gespeichert. In dem Zertifikat 144.1 sind Leserechte des ID-Provider-Computersystems 136 auf die Attribute i = 1 bis i = 4 definiert, wohingegen in dem Zertifikat 144.2 Leserechte auf die Attribute I bis III definiert sind.

Im Weiteren wird ohne Beschränkung der Allgemeinheit angenommen, dass das ID-Provider-Computersystems 136 zur ersten Menge gehört, d.h. zu der Menge von ID-Provider-Computersystemen, die von dem Dienst-Computersystem 150 als vertrauenswürdig angesehen werden, die ID-Provider-Computersysteme 136', 136",...aber nicht zu der ersten Menge gehören, sondern nur zu der zweiten Menge. Das ID-Provider-Computersystem 136 gehört also zu der Teilmenge der ersten und zweiten Mengen.

Die erste Menge kann z.B. in einem Konfigurationsspeicher des Dienst-Computersystems 150 anhand von Identifikatoren der ID-Provider-Computersysteme der ersten Menge festgelegt sein. Diese Identifikatoren können auch in dem Programm 156 fest programmiert sein. Eine weitere Möglichkeit ist, dass die Identifikatoren der ersten Menge der ID-Provider-Computersysteme in einem Verzeichnisserver gespeichert sind, von dem das Dienst-Computersystem die Identifikatoren abruft.

Entsprechend kann es sich für die Definition der zweiten Menge verhalten. Die zweite Menge kann auch unmittelbar auf der Ebene des ID-Tokens definiert sein, indem dort die Idenfitikatoren der ID-Provider-Computersysteme der zweiten Menge gespeichert werden.

Zur Inanspruchnahme eines von dem Dienst-Computersystem 150 angebotenen Dienstes tätigt der Nutzer 102 zunächst eine Nutzereingabe 162 in das Nutzer-Computersystem 100, um beispielsweise in eine Webseite des Dienst-Computersystems 150 seine Anforderung für den gewünschten Dienst einzugeben. Diese Dienst-Anforderung 164 wird von dem Nutzer-Computersystem 100 über das Netzwerk 116 an das Dienst-Computersystem 150 übertragen.

Das Dienst-Computersystem 150 antwortet darauf mit einer Nachricht in Form einer Attributspezifizierung 166, d.h. mit einer Spezifizierung derjenigen Attribute, welche das Dienst-Computersystem 150 zur Bearbeitung der Dienst-Anforderung 164 von dem Nutzer 102 benötigt. Die Attributspezifizierung 166 kann beispielsweise in Form der Attributnamen erfolgen, wie zum Beispiel "Name", "Vorname", "Adresse", "Kreditkartennummer". Die Attributspezifizierung 166 kann eine Angabe von einem oder mehreren Identifikatoren von ID-Provider-Computersystemen der ersten Menge beinhalten.

Im Weiteren wird ohne Beschränkung der Allgemeinheit davon ausgegangen, dass der Identifikator des ID-Provider-Computersystems 138 mit der Attributspezifizierung 166 übertragen wird. Alternativ kann der Identifikator von dem Nutzer-Computersystem 100 von einem Verzeichnisserver abgefragt werden.

Der Empfang der Attributspezifizierung 166 wird dem Nutzer 102 durch das Nutzer-Computersystem 100 signalisiert. Der Nutzer 102 kann daraufhin einen oder erforderlichenfalls mehrere der Konfigurationsdatensätze 158, 160, ... auswählen, die jeweils Attributmengen definieren, welche die Attribute gemäß der Attributspezifizierung 166 zumindest als Teilmenge beinhalten.

Verlangt der Attributspezifizierung 166 beispielsweise lediglich die Mitteilung des Namens, des Vornamens und der Adresse des Nutzers 102, so kann der Nutzer 102 den Konfigurationsdatensatz 158 auswählen. Wird dagegen zusätzlich in der Attributspezifizierung 166 die Kreditkartennummer spezifiziert, so kann der Nutzer 102 zusätzlich den Konfigurationsdatensatz 160 auswählen. Dieser Vorgang kann auch vollautomatisch durch das Nutzer-Computersystem 100, beispielsweise durch Ausführung der Programminstruktionen 112, durchgeführt werden.

Im Weiteren wird zunächst davon ausgegangen, dass nur eine der Konfigurationsdatensätze, wie zum Beispiel der Konfigurationsdatensatz 158, aufgrund der Attributspezifizierung 166 ausgewählt wird.

Das Nutzer-Computersystem 100 sendet daraufhin eine Anforderung 168 an das oder die in dem gewählten Konfigurationsdatensatz angegebene ID-Provider-Computersysteme, in dem betrachteten Beispiel an das ID-Provider-Computersystem 136 des Trust-Centers A. Diese Anforderung 168 beinhaltet eine Angabe der von dem ID-Provider-Computersystem 136 aus der in dem Konfigurationsdatensatz 158 angegebenen Datenquelle auszulesenden Attribute gemäß der Attributspezifizierung 166.

Das ID-Provider-Computersystem 136 wählt daraufhin eines oder mehrerer seiner Zertifikate aus, welche die zum Lesen dieser Attribute erforderlichen Leserechte aufweisen. Wenn beispielsweise die Attribute i = 1 bis 3 aus dem Personalausweis gelesen werden sollen, so wählt das ID-Provider-Computersystem 136 sein Zertifikat 144.1 aus, welches die dafür erforderlichen Leserechte definiert. Diese Auswahl des Zertifikats wird durch Ausführung der Programminstruktionen 149 durchgeführt.

Daraufhin wird die Ausführung des kryptographischen Protokolls gestartet. Beispielsweise sendet das ID-Provider-Computersystem 136 hierzu eine Antwort an das Nutzer-Computersystem 100. Das Nutzer-Computersystem 100 fordert daraufhin den Nutzer 102 zu seiner Authentifizierung gegenüber der spezifizierten Datenquelle, d.h. hier gegenüber dem Personalausweis, auf.

Der Nutzer 102 bringt daraufhin seinen Personalausweis, d.h. den ID-Token 106, in den Bereich des RFID-Lesegeräts 104, und gibt beispielsweise seine PIN zu seiner Authentifizierung ein. Durch die erfolgreiche Authentifizierung des Nutzers 102 gegenüber dem ID-Token 106 wird dieser für die Durchführung des kryptographischen Protokolls, d.h. für die Durchführung der Programminstruktionen 134 freigeschaltet. Im Weiteren authentifiziert sich das ID-Provider-Computersystem 136 gegenüber dem ID-Token 106 mit Hilfe des ausgewählten Zertifikats 144.1, beispielsweise mit Hilfe eines Challenge-Response-Verfahrens. Diese Authentifizierung kann auch gegenseitig sein. Nach erfolgreicher Authentifizierung des ID-Provider-Computersystems 136 gegenüber dem ID-Token 106 richtet das ID-Provider-Computersystem eine Leseanforderung zum Lesen der erforderlichen Attribute an das Nutzer-Computersystem 100, welche dieses über das RFID-Lesegerät 104 an den ID-Token 106 weiterleitet. Der ID-Token 106 prüft anhand des Zertifikats 144.1, ob das ID-Provider-Computersystem 136 die dafür erforderlichen Leserechte hat. Dies ist hier der Fall, da das ID-Provider-Computersystem 136 zu der zweiten Menge gehört, so dass die gewünschten Attribute aus dem geschützten Speicherbereich 124 ausgelesen und mittels Ende-zu-Ende-Verschlüsselung an das ID-Provider-Computersystem über das Nutzer-Computersystem 100 übertragen werden.

Das ID-Provider-Computersystem 136 sendet dann eine Antwort 170, die die ausgelesenen Attribute beinhaltet, über das Netzwerk 116 an das Dienst-Computersystem 150. Die Antwort 170 ist mit dem Zertifikat 144.1 digital signiert.

Alternativ sendet das ID-Provider-Computersystem 136 die Antwort 170 an das Nutzer-Computersystem 100. Der Nutzer 102 erhält daraufhin die Möglichkeit, die in der Antwort 170 beinhalteten Attribute zu lesen und zu entscheiden, ob er diese Attribute wirklich an das Dienst-Computersystem 150 weiterleiten möchte oder nicht. Erst nach Eingabe eines Freigabekommandos des Nutzers 102 in das Nutzer-Computersystem 100 wird dann die Antwort 170 an das Dienst-Computersystem 150 weitergeleitet. Bei dieser Ausführungsform ist es ferner möglich, dass der Nutzer 102 die Antwort 170 um weitere Daten ergänzt. Die Signatur der Antwort 170 wird von dem Dienst-Computersystem 150 geprüft. Da sie von dem ID-Provider-Computersystem 136 stammt, welches zu der ersten Menge gehört, wird die Antwort 170 von dem Dienst-Computersystem 150 als vertrauenswürdig eingestuft.

Wenn hingegen die Attributspezifizierung 166 ein oder mehrere Attribute spezifiziert, die von einer Datenquelle gelesen werden können, auf welche ein ID-Provider-Computersystem zugreifen kann, das zu der zweiten Menge, nicht aber zu der ersten Menge gehört, wird wie folgt vorgegangen:
Das Nutzer-Computersystem 100 leitet die Attributspezifizierung 166 in Form der Anforderung 168 an ein ID-Provider-Computersystem der ersten Menge, d.h. in dem hier betrachteten Ausführungsbeispiel an das ID-Provider-Computersystem 136 weiter. Die Anforderung 168 beinhaltet neben der Attributspezifizierung 166 eine Angabe des ID-Provider-Computersystems der zweiten Menge, welches auf die spezifizierten Attribute zugreifen kann. Das ID-Provider-Computersystem der ersten Menge, welches die Anforderung 168 empfängt, leitet diese Anforderung dann an das in der Anforderung 168 angegebene ID-Provider-Computersystem der zweiten Menge als Anforderung 168' weiter.

Dieses ID-Provider-Computersystem der zweiten Menge authentifiziert sich dann gegenüber der Datenquelle und liest das zumindest eine Attribut gemäß Attributspezifizierung aus der Datenquelle aus, wie oben mit Bezug auf das ID-Provider-Computersystem 136 erläutert.

Das ID-Provider-Computersystem der zweiten Menge generiert daraufhin die Antwort 170', welche die Attribute beinhaltet. Das ID-Provider-Computersystem der zweiten Menge signiert die Antwort 170' und sendet die Antwort 170' an das ID-Provider-Computersystem der ersten Menge.

Das ID-Provider-Computersystem der ersten Menge betrachtet das ID-Provider-Computersystem der zweiten Menge als vertrauenswürdig. Nach Prüfung der Signatur der von dem ID-Provider-Computersystem der zweiten Menge empfangenen Antwort 170' signiert das ID-Provider-Computersystem der ersten Menge die Antwort 170' seinerseits und sendet die Antwort 170' entweder an das Nutzer-Computersystem 100 zur Weiterleitung an das Dienst-Computersystem 150 oder direkt an das Dienst-Computersystem 150. Das Dienst-Computersystem 150 prüft dann die Signatur des ID-Provider-Computersystems der ersten Menge. Da das Dienst-Computersystem 150 das ID-Provider-Computersystem der ersten Menge als vertrauenswürdig einstuft, betrachtet es die mit der Antwort 170' mitgeteilten Attribute als valide, sofern die Signatur des ID-Provider-Computersystems der ersten Menge valide ist.

Beispielsweise beinhaltet die Attributspezifizierung 166 eine Spezifizierung der Attribute I, II und III. Nachdem das Nutzer-Computersystem 100 diese Attributspezifizierung über das Netzwerk 116 empfangen hat, stellt es anhand des Konfigurationsdatensatzes 160 fest, dass diese Attribute auf der Datenquelle "Kreditkarte" gespeichert sind, d. h. auf dem ID-Token 106'. Hierfür ist der ID-Provider "Trust-Center B", d.h. das ID-Provider-Computersystem 136' der zweiten Menge leseberechtigt. Das ID-Provider-Computersystem 136' gehört aber nicht zu der ersten Menge, welche von dem Dienst-Computersystem 150 als vertrauenswürdig eingestuft wird. Dies kann das Nutzer-Computersystem 100 beispielsweise durch eine Abfrage eines öffentlichen Verzeichnisservers feststellen. Ebenso kann das Nutzer-Computersystem 100 durch Abfrage eines Verzeichnisservice feststellen, welches oder welche ID-Provider-Computersysteme zu der ersten Menge gehören, d. h. zu der Menge von ID-Provider-Computersystemen, welche das Dienst-Computersystem 150 als vertrauenswürdig betrachtet. In dem hier betrachteten Beispielsfall ist dies das ID-Provider-Computersystem 136.

Das Nutzer-Computersystem 100 leitet daraufhin die Attributspezifizierung 166 in Form der Anforderung 168 an das ID-Provider-Computersystem 136 der ersten Menge weiter, wobei die Anforderung 168 einen Identifikator beinhaltet, welcher das ID-Provider-Computersystem 136' identifiziert. Das ID-Provider-Computersystem 136 leitet die Anforderung 168 an das in der Anforderung 168 spezifizierte ID-Provider-Computersystem 136' weiter, wo die Anforderung 168' bearbeitet wird.

Das ID-Provider-Computersystem 136' liest also die Attribute I, II, III von dem ID-Token 106' zum Beispiel entsprechend den Schritten 204 bis 206 der Ausführungsform gemäß Figur 2. Das ID-Provider-Computersystem 136' sendet die von ihm signierte Antwort 170', welches die gelesenen Attribute I, II, III beinhaltet, nicht direkt an das Dienst-Computersystem 150 oder an das Nutzer-Computersystem 100, sondern an das ID-Provider-Computersystem 136, von welchem es die Anforderung 168' erhalten hatte.

Das ID-Provider-Computersystem 136 prüft daraufhin die Validität der Signatur des ID-Provider-Computersystems 136'. Falls die Signatur valide ist, betrachtet das ID-Provider-Computersystem 136 die mit der Antwort 170' mitgeteilten Attributwerte I, II und III als valide und signiert die Antwort 170' seinerseits, um sie an das Nutzer-Computersystem 100 zur Weiterleitung an das Dienst-Computersystem 150 zu senden oder um die Antwort 170' unmittelbar an das Dienst-Computersystem 150 zu senden.

Die Attributspezifizierung 166 kann von dem Dienst-Computersystem 150 beispielsweise als ein so genanntes Softtoken gesendet werden. Dieses Softtoken wird erforderlichenfalls von dem Nutzer-Computersystem 100 durch die Angabe eines ID-Provider-Computersystems der zweiten Menge, d. h. des ID-Provider-Computersystems 136', ergänzt und als Anforderung 168 an das ID-Provider-Computersystem 136 weitergeleitet. Das ID-Provider-Computersystem 136 hinsichtlich dessen eine Vertrauensbeziehung zu dem Dienst-Computersystem 150 besteht, kann von dem Dienst-Computersystem 150 in dem Softtoken angegeben sein. Eine Abfrage eines öffentlichen Verzeichnisservers durch das Nutzer-Computersystem 100 erübrigt sich in diesem Fall.

Wenn mehrere ID-Provider-Computersysteme 136, 136', ... involviert sind, so können die einzelnen Antworten der ID-Provider-Computersysteme durch das Nutzer-Computersystem 100 in einer einzigen Antwort, die sämtliche der Attribute gemäß Attributspezifizierung 166 beinhalten, zusammengefasst werden, welche dann von dem Nutzer-Computersystem 100 an das Dienst-Computersystem 150 gesendet wird.

Nach einer Ausführungsform der Erfindung kann der Nutzer 102 anlässlich der Dienstanforderung 164 ein oder mehrerer seiner Attribute gegenüber dem Dienst-Computersystem 150 offenbaren, beispielsweise indem diese Attribute des Nutzers als Teil der Dienstanforderung 164 über das Netzwerk 116 an das Dienst-Computersystem übertragen werden. Insbesondere kann der Nutzer 102 diese Attribute in die Webseite des Dienst-Computersystems 150 eingeben. Die Richtigkeit dieser Attribute wird dann durch die Antwort 170 bestätigt, d.h. das Dienst-Computersystem 150 kann die von dem Nutzer 102 empfangenen Attribute mit den von dem ID-Provider Computersystem 136 aus dem ID-Token 106 ausgelesenen Attribute vergleichen und auf Übereinstimmung prüfen.

Nach einer weiteren Ausführungsform der Erfindung kann auch zumindest ein weiteres Attribut in der Attributspezifizierung 166 angegeben sein, welches nicht auf einem der ID-Token des Nutzers 102 gespeichert ist, sondern von einer externen Datenquelle abfragbar ist. Hierbei kann es sich z.B. um ein Attribut betreffend die Kreditwürdigkeit des Nutzers 102 handeln. Das Nutzer-Computersystem 100 kann hierzu einen weiteren Konfigurationsdatensatz 161 beinhalten, welcher für das Attribut A - z.B. die Kreditwürdigkeit - die Angabe einer Datenquelle und eines ID-Provider Computersystems beinhaltet. Bei der Datenquelle kann es sich um eine Online Auskunftei, wie z.B. Schufa, Dun & Bradstreet oder dergleichen handeln. Als ID-Provider Computersystem ist beispielsweise ein Trust Center C angegeben, wie in der Ausführungsform der Fig. 3. Die Datenquelle kann sich hier in dem Trust Center C befinden.

Um das Attribut A abzufragen richtet also das Nutzer-Computersystem 100 eine entsprechende Anforderung (in der Fig. 3 nicht gezeigt) an das Trust Center C, d.h. das ID-Provider Computersystem 136". Dieses liefert daraufhin das Attribut A, welches das Nutzer-Computersystem 100 zusammen mit den weiteren Attributen, die aus dem oder den ID-Token des Nutzers 102 ausgelesen wurden, an das Dienst-Computersystem 150 weiterleitet.

Vorzugsweise erfolgt die Abfrage des Attributs A nachdem die die digitale Identität des Nutzer 102 betreffenden Attribute bereits aus einem der ID-Token des Nutzers 102 abgefragt worden sind, und beispielsweise als signierte Antwort 170 von dem Nutzer-Computersystem 100 empfangen worden sind. Die Abfrage des Attributs A durch das Nutzer-Computersystem 100 von dem ID-Provider Computersystem 136" beinhaltet dann die signierte Antwort 170, so dass das ID-Provider Computersystem 136" hinsichtlich der Identität des Nutzers 102 ein sichere Information hat.

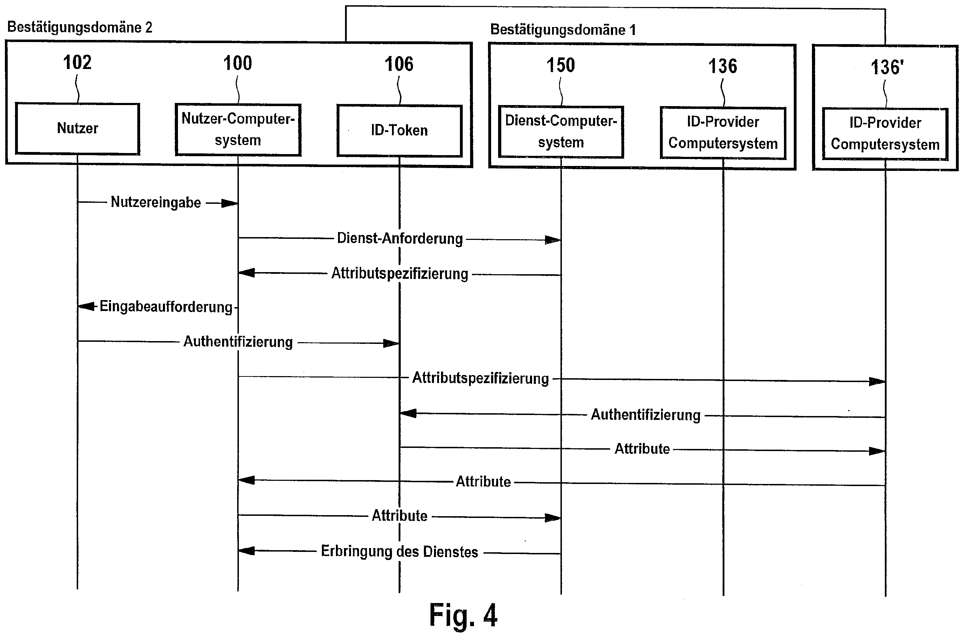

Die Figur 4 zeigt eine weitere Ausführungsform eines erfindungsgemäßen Verfahrens. Das Verfahren involviert die Bestätigungsdomänen 1 und 2, wobei die Bestätigungsdomäne 1 das Dienst-Computersystem 150 und die ID-Provider-Computersysteme der ersten Menge beinhaltet, zu der das ID-Provider-Computersystem 136 gehört, und wobei die Bestätigungsdomäne 2 den ID-Token 106 des Nutzers 102, das Nutzer-Computersystem 100 und die die ID-Provider-Computersysteme der zweiten Menge beinhaltet, wozu das ID-Provider-Computersystem 136' gehört. In der hier betrachteten Ausführungsform gehört das ID-Provider-Computersystem 136' nicht zu der ersten Menge.

Durch eine Nutzereingabe eines Nutzers 102 in ein Nutzer-Computersystem 100 spezifiziert der Nutzer 102 einen Dienst eines Dienst-Computersystems, welchen er oder sie in Anspruch nehmen möchte. Dies erfolgt beispielsweise durch Aufruf einer Internetseite des Dienst-Computersystems und einer Auswahl eines der dort angebotenen Dienste. Die Dienst-Anforderung des Nutzers 102 wird von dem Nutzer-Computersystem 100 an das Dienst-Computersystem 150 übertragen.

Das Dienst-Computersystem 150 antwortet auf die Dienst-Anforderung mit einer Attributspezifizierung, d.h. beispielsweise einer Liste von Attributnamen. Die Attributspezifizierung kann in Form des Softtokens gesendet werden. Neben der Attributspezifizierung kann der Softtoken eine Angabe eines ID-Provider-Computersystems der ersten Menge beinhalten. In dem hier betrachteten Beispielsfall ist dies das ID-Provider-Computersystem 136. Nach Empfang der Attributspezifizierung fordert das Nutzer-Computersystem 100 den Nutzer 102, beispielsweise durch eine Eingabeaufforderung, zur Authentifizierung gegenüber dem ID-Token 106 auf.

Der Nutzer 102 authentifiziert sich daraufhin gegenüber dem ID-Token 106, beispielsweise durch Eingabe seiner PIN. Ferner bestimmt das Nutzer-Computersystem 100 welches ID-Provider-Computersystem eine Leseberechtiung zum Lesen der spezifizierten Attribute von dem ID-Token 106 hat. Das kann mit Hilfe von Konfigurationsdatensätzen erfolgen, durch Abfrage des ID-Tokens 106 oder durch Abfrage eines Verzeichnisservers. In dem hier betrachteten Beispielsfall ist dies das ID-Provider-Computersystem 136'.

Nach erfolgreicher Authentifizierung wird der Softtoken von dem Nutzer-Computersystem 100 an das ID-Provider-Computersystem 136 weitergeleitet, wobei der Softtoken um einen Identifikator des ID-Provider-Computersystems 136' ergänzt worden ist. Der Softtoken wird von dem ID-Provider-Computersystem 136 an das ID-Provider-Computersystem 136' weitergeleitet. Dieses authentifiziert sich daraufhin gegenüber dem ID-Token 106 und richtet eine Leseanforderung zum Lesen der Attribute gemäß der Attributspezifizierung an den ID-Token 106.

Unter der Voraussetzung der vorherigen erfolgreichen Authentifizierung des Nutzers 102 und des ID-Provider-Computersystems 136' antwortet der ID-Token 106 auf die Leseanforderung mit den gewünschten Attributen. Das ID-Provider-Computersystem 136' signiert die Attribute und sendet die signierten Attribute an das ID-Provider-Computersystem 136. Das ID-Provider-Computersystem 136 signiert die Attribute auch seinerseits und leitet die signierten Attribute an das Nutzer-Computersystem 100 weiter. Nach Freigabe durch den Nutzer 102 werden die Attribute zusammen mit der Signatur des ID-Provider-Computersystems 136 dann an das Dienst-Computersystem 150 übertragen, welches dann ggf. den gewünschten Dienst erbringen kann.

Dies hat insbesondere den Vorteil, dass ein elektronischer Rechtsverkehr über Bestätigungsdomänen hinweg in effizienter und doch sicherer Art und Weise durchgeführt werden kann.

### Bezugszeichenliste

- 100: Nutzer-Computersystem
- 102: Nutzer
- 104: Schnittstelle
- 106: ID-Token
- 108: Schnittstelle
- 110: Prozessor
- 112: Programminstruktionen
- 114: Netzwerk-Schnittstelle
- 116: Netzwerk
- 118: elektronischer Speicher
- 120: geschützter Speicherbereich
- 122: geschützter Speicherbereich
- 124: geschützter Speicherbereich
- 126: Speicherbereich
- 128: Prozessor
- 130: Programminstruktionen
- 132: Programminstruktionen
- 134: Programminstruktionen
- 136: ID-Provider-Computersystem
- 138: Netzwerk-Schnittstelle
- 140: Speicher
- 142: privater Schlüssel
- 144: Zertifikat
- 145: Prozessor
- 146: Programm instruktionen
- 148: Programminstruktionen
- 149: Programminstruktionen
- 150: Dienst-Computersystem
- 152: Netzwerk-Schnittstelle
- 154: Prozessor
- 156: Programminstruktionen
- 158: Konfigurationsdatensatz
- 160: Konfigurationsdatensatz
- 161: Konfigurationsdatensatz
- 162: Nutzereingabe
- 164: Dienst-Anforderung
- 166: Attributspezifizierung
- 168: Anforderung
- 170: Antwort

## Patentansprüche

1. Verfahren zum Lesen zumindest eines in einem ID-Token (106, 106') gespeicherten Attributs, wobei der ID-Token einem Nutzer (102) zugeordnet ist, mit folgenden Schritten:
- Senden einer Anforderung (164) von einem vierten Nutzer-Computersystem (100) an ein zweites Dienst-Computersystem (150),
- Spezifizierung eines oder mehrerer Attribute durch das zweite Dienst-Computersystem (150),
- Senden der Attributspezifizierung (166) von dem zweiten Dienst-Computersystem (150) an ein drittes Computersystem (136),
- Weiterleitung der Attributspezifizierung von dem dritten Computersystem (136) an ein erstes Computersystem (136'),
- Authentifizierung des Nutzers gegenüber dem ID-Token (106, 106'),
- Authentifizierung des ersten Computersystems (136') gegenüber dem ID-Token,
- nach erfolgreicher Authentifizierung des Nutzers und des ersten Computersystems gegenüber dem ID-Token, Lesezugriff des ersten Computersystems auf das zumindest eine in dem ID-Token gespeicherte Attribut,
- Signierung des zumindest einen aus dem ID-Token gelesenen Attributs durch das erste Computersystem,
- Übertragung des signierten Attributs von dem ersten Computersystem an das zweite Dienst-Computersystem,
wobei die Authentifizierung des ersten Computersystems (136') gegenüber dem ID-Token aufgrund einer Attributspezifizierung (166, 168') erfolgt, die das erste Computersystem von dem dritten Computersystem (136) empfängt,
wobei die Attributspezifikation das zumindest eine Attribut spezifiziert,
wobei der Lesezugriff des ersten Computersystems erfolgt, um die in der Attributspezifizierung spezifizierten ein oder mehrere Attribute aus dem ID-Token auszulesen.

2. Verfahren nach Anspruch 1, wobei die Authentifizierung des ersten Computersystems gegenüber dem ID-Token mit Hilfe eines Zertifikats (144) des ersten Computersystems erfolgt, wobei das Zertifikat eine Angabe derjenigen in dem ID-Token gespeicherten Attribute beinhaltet, für welche das erste Computersystem für den Lesezugriff berechtigt ist, wobei vorzugsweise der ID-Token die Leseberechtigung des ersten Computersystems für den Lesezugriff auf zumindest eines der Attribute mit Hilfe des Zertifikats überprüft.

3. Verfahren nach Anspruch 1 oder 2, wobei die Anforderung (164) einen Identifikator zur Identifizierung des ersten Computersystems durch das zweite Dienst-Computersystem beinhaltet, und wobei die Übertragung der Attributspezifizierung von dem zweiten Dienst-Computersystem an das erste Computersystem ohne Zwischenschaltung des vierten Nutzer-Computersystems erfolgt.

4. Verfahren nach Anspruch 3, wobei das vierte Nutzer-Computersystem mehrere vordefinierte Konfigurationsdatensätze (158, 160,...) aufweist, wobei jeder der Konfigurationsdatensätze eine Teilmenge der Attribute, zumindest eine Datenquelle und ein erstes Computersystem aus einer Menge von ersten Computersystemen (136, 136',...) spezifiziert, wobei die Attributspezifizierung von dem zweiten Dienst-Computersystem zunächst an das vierte Nutzer-Computersystem übertragen wird, sodass mittels des vierten Nutzer-Computersystems zumindest einer der Konfigurationsdatensätze ausgewählt wird, der eine Teilmenge der Attribute spezifiziert, welche das zumindest eine in der Attributspezifizierung spezifizierte Attribut beinhaltet, und wobei das dritte Computersystem die Attributspezifizierung über das dritte Computersystem an das erste Computersystem weiterleitet, und wobei eine Verbindung zwischen dem ersten Computersystem und dem mit dem durch die Angabe der Datenquelle in dem ausgewählten Konfigurationsdatensatz spezifizierten ID-Token über das vierte Nutzer-Computersystem aufgebaut wird.

5. Verfahren nach einem der vorhergehenden Ansprüche, wobei das zumindest eine von dem ersten Computersystem aus dem ID-Token gelesene Attribut an das vierte Nutzer-Computersystem gesendet wird, von wo es nach Freigabe durch den Nutzer an das zweite Dienst-Computersystem weitergeleitet wird, wobei vorzugsweise der Nutzer die Attribute vor der Weiterleitung an das zweite Dienst- Computersystem durch weitere Daten ergänzen kann.

6. Verfahren nach einem der vorhergehenden Ansprüche, wobei das erste Computersystem mehrere der Zertifikate (144.1; 144.2) mit unterschiedlichen Leserechten aufweist, wobei das erste Computersystem aufgrund des Empfangs der Attributspezifizierung zumindest eines der Zertifikate auswählt, welches die zum Lesen der in der Attributspezifizierung spezifizierten Attribute ausreichenden Leserechte aufweist.

7. Verfahren nach einem der vorhergehenden Ansprüche, wobei das vierte Nutzer-Computersystem zumindest einen Konfigurationsdatensatz (161) hat, welcher eine externe Datenquelle zur Abfrage eines weiteren Attributs (A) von dem dritten Computersystem über das Netzwerk (116) spezifiziert, wobei die Abfrage des weiteren Attributs vorzugsweise erfolgt, nachdem das zumindest eine Attribut aus dem ID-Token ausgelesen worden ist, und nachdem das vierte Nutzer-Computersystem das zumindest eine signierte Attribut von dem ersten Computersystem empfangen hat, wobei die Abfrage das zumindest eine signierte Attribut beinhaltet.

8. Verfahren nach einem der vorhergehenden Ansprüche, wobei die Anforderung (164) zum Aufruf eines von dem zweiten Dienst-Computersystem zur Verfügung gestellten Dienstes dient, wobei Voraussetzung für die Erbringung des Dienstes der Empfang der einen oder mehreren der Attribute durch das zweite Dienst-Computersystem ist, wobei die Attributspezifizierung von dem vierten Nutzer-Computersystem (100) an das dritte Computersystem (136) in Form einer Anforderung (168) weitergeleitet wird, die eine Angabe des ersten Computersystems (136') beinhaltet, wobei das erste Computersystem das zumindest eine Attribut an das dritte Computersystem sendet, wobei das dritte Computersystem das zumindest eine Attribut an das zweite Dienst-Computersystem weiterleitet, wobei das dritte Computersystem das zumindest eine Attribut vor der Weiterleitung signiert.

9. Computerprogrammprodukt mit von einem Computersystem ausführbaren Instruktionen zur Durchführung eines Verfahrens nach einem der vorhergehenden Ansprüche.

10. ID-Token geeignet für die Durchführung eines Verfahrens nach Anspruch 1 mit
- einem geschützten Speicherbereich (124) zur Speicherung von zumindest einem Attribut und zumindest einem Identifikators eines ersten Computersystems (136'),
- Mitteln (120, 130) zur Authentifizierung eines dem ID-Token zugeordneten Nutzers (102) gegenüber dem ID-Token,
- Mitteln (134) zur Authentifizierung des ersten Computersystems (136') gegenüber dem ID-Token,
- Mitteln (132) zum Aufbau einer geschützten Verbindung zu dem ersten Computersystem, über die das erste Computersystem das zumindest eine Attribut auslesen kann,
wobei eine notwendige Voraussetzung für das Auslesen des zumindest einen Attributs aus dem ID-Token durch das erste Computersystem die erfolgreiche Authentifizierung des Nutzers und des ersten Computersystems gegenüber dem ID-Token ist,
wobei die Mittel zur Authentifizierung des ersten Computersystems gegenüber dem ID-Token vorzugsweise so ausgebildet sind, dass die Authentifizierung des ersten Computersystems mit Hilfe eines Zertifikats (144) des ersten Computersystems erfolgt, wobei das Zertifikat eine Angabe derjenigen in dem ID-Token gespeicherten Attribute beinhaltet, für welche das erste Computersystem für den Lesezugriff berechtigt ist,
wobei das ID-Token vorzugsweise ferner Mittel zur Ende zu Ende Verschlüsselung der Verbindung für eine geschützte Übertragung des zumindest einen der Attribute zu dem ersten Computersystem beinhaltet, und wobei es sich bei dem ID-Token vorzugsweise um ein elektronisches Gerät, insbesondere einen USB Stick, oder ein Dokument, insbesondere ein Wert- oder Sicherheitsdokument handelt.

11. Computersystem (136') geeignet für die Durchführung eines Verfahrens nach Anspruch 1 mit
- Mitteln (138') zum Empfang einer Attributspezifizierung (166) über ein Netzwerk (116) von einem nicht autorisierten Computersystem (136), wobei die Attributspezifizierung zumindest ein Attribut spezifiziert,
- Mitteln (142', 144', 146') zur Authentifizierung gegenüber einem ID-Token (106),
- Mitteln zum Lesen des zumindest einen Attributs aus dem ID-Token über eine geschützte Verbindung,
- Mitteln zur Weiterleitung des zumindest einen Attributs an das nicht autorisierte Computersystem,
wobei das Lesen des zumindest einen Attributs voraussetzt, dass sich ein dem ID-Token zugeordneter Nutzer und das Computersystem gegenüber dem ID-Token authentifiziert haben, und
mit Mitteln zur Generierung einer Anforderung an den Nutzer zur Authentifizierung gegenüber dem ID-Token aufgrund des Empfangs der Attributspezifizierung, wobei das Computersystem vorzugsweise ferner Mittel (144) zum Signieren des zumindest einen Attributs beinhaltet, wobei das signierte Attribut gesendet wird.

12. Computersystem nach Anspruch 11, mit mehreren der Zertifikate (144.1; 144.2), wobei die Zertifikate unterschiedliche Leserechte definieren, wobei das Computersystem dazu ausgebildet ist, aufgrund des Empfangs der Attributspezifizierung zumindest eines der Zertifikate auszuwählen, welches die zum Lesen der in der Attributspezifizierung spezifizierten Attribute ausreichenden Leserechte aufweist.

## Claims

1. A method for reading at least one attribute stored in an ID token (106, 106'), wherein the ID token is assigned to a user (102), said method having the following steps:
- sending a request (164) from a fourth user computer system (100) to a second service computer system (150),
- specifying one or more attributes by the second service computer system (150),
- sending the attribute specification (166) from the second service computer system (150) to a third computer system (136),
- forwarding the attribute specification from the third computer system (136) to a first computer system (136'),
- authenticating the user to the ID token (106, 106'),
- authenticating the first computer system (136') to the ID token,
- following successful authentication of the user and of the first computer system to the ID token, granting read access for the first computer system to the at least one attribute stored in the ID token,
- signing the at least one attribute, read from the ID token, by the first computer system,
- transmitting the signed attribute from the first computer to the second service computer system,
wherein the first computer system (136') is authenticated to the ID token on the basis of an attribute specification (166, 168') received by the first computer system from the third computer system (136), wherein the attribute specification specifies the at least one attribute,
wherein the read access for the first computer system is granted in order to read the one or more attributes specified in the attribute specification from the ID token.

2. The method according to claim 1, wherein the first computer system is authenticated to the ID token using a certificate (144) of the first computer system, wherein the certificate includes information regarding those attributes stored in the ID token for which the first computer system is authorised for read access, wherein the ID token preferably checks the read authorisation of the first computer system for the read access to at least one of the attributes using the certificate.

3. The method according to claim 1 or 2, wherein the request (164) includes an identifier for identification of the first computer system by the second service computer system, and wherein the attribute specification is transmitted from the second service computer system to the first computer system without interpositioning of the fourth user computer system.

4. The method according to claim 3, wherein the fourth user computer system comprises a plurality of predefined configuration data records (158, 160,...), wherein each of the configuration data records specifies a subset of the attributes, at least one data source, and a first computer system from a set of first computer systems (136, 136',...), wherein the attribute specification is transmitted from the second service computer system firstly to the fourth user computer system, such that by means of the fourth user computer system at least one of the configuration data records is selected which specifies a subset of the attributes which includes the at least one attribute specified in the attribute specification, and wherein the third computer system forwards the attribute specification via the third computer system to the first computer system, and wherein a connection between the first computer system and the ID token specified by the information regarding the data source in the selected configuration data record is established via the fourth user computer system.

5. The method according to any one of the preceding claims, wherein the at least one attribute read from the ID token by the first computer system is sent to the fourth user computer system, where it is then forwarded, after release by the user, to the second service computer system, wherein the user preferably can supplement the attributes with further data before they are forwarded to the second service computer system.

6. The method according to any one of the preceding claims, wherein the first computer system comprises a plurality of certificates (144.1; 144.2) having different read rights, wherein the first computer system on the basis of the receipt of the attribute specification selects at least one of the certificates which has the read rights sufficient to read the attributes specified in the attribute specification.

7. The method according to any one of the preceding claims, wherein the fourth user computer system has at least one configuration data record (161) which specifies an external data source for querying a further attribute (A) from the third computer system via the network (116), wherein the further attribute is preferably queried once the at least one attribute has been read from the ID token and once the fourth user computer system has received the at least one signed attribute from the first computer system, wherein the query includes the at least one signed attribute.

8. The method according to any one of the preceding claims, wherein the request (164) is used to call up a service provided by the second service computer system, wherein a precondition for providing the service is the receipt of the one or more attributes by the second service computer system, wherein the attribute specification is forwarded from the fourth user computer system (100) to the third computer system (136) in the form of a request (168) which includes information regarding the first computer system (136'), wherein the first computer system sends the at least one attribute to the third computer system, wherein the first computer system forwards the at least one attribute to the second service computer system, wherein the third computer system signs the at least one attribute before said attribute is forwarded.

9. A computer program product having instructions that can be executed by a computer system for carrying out a method according to any one of the preceding claims.

10. An ID token suitable for carrying out a method according to claim 1, said ID token having
- a protected memory region (124) for storing at least one attribute and at least one identifier of a first computer system (136'),
- means (120, 130) for authenticating to the ID token a user (102) assigned to the ID token,
- means (134) for authenticating the first computer system (136') to the ID token,
- means (132) for establishing a protected connection to the first computer system, via which connection the first computer system can read the at least one attribute,
wherein a necessary precondition for the reading of the at least one attribute from the ID token by the first computer system is the successful authentication of the user and of the first computer system to the ID token,
wherein the means for authenticating the first computer system to the ID token are preferably designed such that the first computer system is authenticated using a certificate (144) of the first computer system, wherein the certificate includes information regarding those attributes stored in the ID token for which the first computer system is authorised for read access,
wherein the ID token preferably also includes means for end-to-end encryption of the connection for protected transmission of the at least one of the attributes to the first computer system, and wherein the ID token is preferably an electronic device, in particular a USB stick, or a document, in particular a value or security document.

11. A computer system (136') suitable for carrying out a method according to claim 1, said computer system having
- means (138') for receiving an attribute specification (166) via a network (116) from an unauthorised computer system (136), wherein the attribute specification specifies at least one attribute,
- means (142', 144', 146') for authentication to an ID token (106),
- means for reading the at least one attribute from the ID token via a protected connection,
- means for forwarding the at least one attribute to the unauthorised computer system,
wherein the reading of the at least one attribute presupposes that a user assigned to the ID token and the computer system have been authenticated to the ID token, and
having means for generating a request to the user for authentication to the ID token on the basis of the receipt of the attribute specification, wherein the computer system preferably also includes means (144) for signing the at least one attribute, wherein the signed attribute is sent.

12. The computer system according to claim 11, comprising a plurality of the certificates (144.1; 144.2), wherein the certificates define different read rights, wherein the computer system is designed on the basis of the receipt of the attribute specification to select at least one of the certificates which has the read rights sufficient for reading the attributes specified in the attribute specification.

## Revendications

1. Procédé de lecture d'au moins un attribut stocké dans un jeton d'identification ID (106, 106'), où le jeton d'ID est associé à un utilisateur (102), avec les étapes suivantes :
- d'envoi d'une requête (164) à partir d'un quatrième système informatique d'utilisateur (100) à un deuxième système informatique de service (150),
- de spécification d'un ou de plusieurs attributs par le deuxième système informatique de service (150) ;
- d'envoi de la spécification d'attribut (166) du deuxième système informatique de service (150) à un troisième système informatique (136),
- de retransmission de la spécification d'attribut du troisième système informatique (136) à un premier système informatique (136'),
- d'authentification de l'utilisateur vis-à-vis du jeton d'ID (106, 106'),
- d'authentification du premier système informatique (136') vis-à-vis du jeton d'ID,
- après l'authentification réussie de l'utilisateur et du premier système informatique vis-à-vis du jeton d'ID, d'accès en lecture du premier système informatique pour l'au moins un attribut stocké dans le jeton d'ID,
- de signature de l'au moins un attribut lu dans le jeton d'ID par le premier système informatique,
- de transmission de l'attribut signé du premier système informatique au deuxième système informatique de service,
où l'authentification du premier système informatique (136') vis-à-vis du jeton d'ID a lieu en raison d'une spécification d'attribut(166, 168') que reçoit le premier système informatique du troisième système informatique (136),
où la spécification d'attribut spécifie l'au moins un attribut,
où l'accès en lecture du premier système informatique a lieu pour lire un ou plusieurs attributs spécifiés dans la spécification d'attribut à partir du jeton d'ID.

2. Procédé selon la revendication 1, dans lequel l'authentification du premier système informatique vis-à-vis du jeton d'ID a lieu avec l'aide d'un certificat (144) du premier système informatique, où le certificat contient une indication des attributs en question stockés dans le jeton d'ID pour lesquels le premier système informatique est habilité à avoir un accès en lecture, où, de préférence, le jeton d'ID vérifie l'habilitation à la lecture du premier système informatique pour l'accès en lecture pour au moins un des attributs à l'aide du certificat.

3. Procédé selon la revendication 1 ou 2, dans lequel la requête (164) contient un identifieur pour l'identification du premier système informatique par le deuxième système informatique de service, et dans lequel la transmission de la spécification d'attribut a lieu du deuxième système informatique de service vers le premier système informatique sans connexion intermédiaire du quatrième système informatique d'utilisateur.

4. Procédé selon la revendication 3, dans lequel le quatrième système informatique d'utilisateur présente plusieurs ensembles de données de configuration (158, 160,...) prédéfinis, chacun des ensembles de données de configuration spécifiant une quantité partielle des attributs, au moins une source de donnée et un premier système informatique parmi une quantité de premiers systèmes informatiques (136, 136', ...), dans lequel la spécification des attributs est d'abord transmise du deuxième système informatique de service vers le quatrième système informatique d'utilisateur de sorte qu'au moins un des ensembles de données de configuration est choisi au moyen du quatrième système informatique d'utilisateur qui spécifie une quantité partielle des attributs, laquelle contient l'au moins un attribut spécifié dans la spécification d'attribut et où le troisième système informatique transmet la spécification d'attribut au premier système informatique par le biais du troisième système informatique, et où une connexion est établie entre le premier système informatique et le jeton d'ID spécifié dans l'ensemble de données de configuration choisi par l'indication de la source de données par le biais du quatrième système informatique d'utilisateur.

5. Procédé selon l'une des revendications précédentes, dans lequel l'au moins un attribut lu à partir du jeton d'ID par le premier système informatique est envoyé au quatrième système informatique d'utilisateur, d'où il est retransmis jusqu'au deuxième système informatique de service après la libération par l'utilisateur, où, de préférence, l'utilisateur peut compléter les attributs avec d'autres données avant la retransmission jusqu'au deuxième système informatique de service.

6. Procédé selon l'une des revendications précédentes, dans lequel le premier système informatique présente plusieurs parmi les certificats (144.1 ; 144.2) dotés de droits de lecture variables, où, le premier système informatique, en raison de la réception de la spécification d'attribut d'au moins un des certificats, choisit lequel présente des droits de lecture suffisants pour la lecture des attributs spécifiés dans la spécification d'attributs.

7. Procédé selon l'une des revendications précédentes, dans lequel le quatrième système informatique d'utilisateur a au moins un ensemble de données de configuration (161), lequel spécifie une source de données externe pour l'interrogation d'un nouvel attribut (A) par le troisième système informatique par le biais du réseau (116), où l'interrogation du nouvel attribut a lieu de préférence après que l'au moins un attribut ait été lu à partir du jeton d'ID, et après que le quatrième système informatique d'utilisateur ait reçu l'au moins un attribut signé du premier système informatique, où l'interrogation contient l'au moins un attribut signé.

8. Procédé selon l'une des revendications précédentes, dans lequel la requête (164) sert à l'activation d'un service mis à disposition par le deuxième système informatique de service, où, une condition pour la mise en place du service, est la réception d'un ou de plusieurs des attributs par le deuxième système informatique de service, où la spécification d'attribut est retransmise du quatrième système informatique d'utilisateur (100) au troisième système informatique (136) sous la forme d'une requête (168), qui contient l'indication du premier système informatique (136'), où le premier système informatique envoie l'au moins un attribut au troisième système informatique, où le premier système informatique envoie l'au moins un attribut au troisième système informatique, où le troisième système informatique retransmet l'au moins un attribut au deuxième système informatique de service, où le troisième système informatique signe l'au moins un attribut avant la retransmission.

9. Produit-programme d'ordinateur doté d'instructions exécutables par un système informatique pour la réalisation d'un procédé selon l'une des revendications précédentes.

10. Jeton d'ID approprié pour la réalisation d'un procédé selon la revendication 1, doté
- d'une zone de mémoire (124) protégée pour le stockage d'au moins un attribut et d'au moins un identificateur d'un premier système informatique (136'),
- de moyens (120, 130) pour l'authentification d'un utilisateur (102) associé au jeton d'ID vis-à-vis du jeton d'ID,
- de moyens (134) pour l'authentification d'un premier système informatique (136') vis-à-vis du jeton d'ID,
- de moyens (132) pour l'établissement d'une connexion sécurisée vers le premier système informatique par le biais desquels le premier système informatique peut lire l'au moins un attribut,
où une condition nécessaire pour la lecture de l'au moins un attribut à partir du jeton d'ID est l'authentification réussie de l'utilisateur et du premier système informatique vis-à-vis du jeton d'ID par le premier système informatique,
où les moyens pour l'authentification du premier système informatique vis-à-vis du jeton d'ID sont de préférence conçus de sorte que l'authentification du premier système informatique a lieu à l'aide d'un certificat (144) du premier système informatique, où le certificat contient une indication des attributs en question stockés dans le jeton d'ID pour lesquels le premier système informatique est habilité à l'accès en lecture,
où le jeton d'ID contient de préférence en outre des moyens pour le cryptage de bout en bout de la liaison pour la transmission sécurisée de l'au moins un des attributs vers le premier système informatique, et
où, dans le cas du jeton d'ID, il s'agit de préférence d'un appareil électronique, notamment d'un clé USB, ou d'un document, notamment un document de valeur ou de sécurité.

11. Système informatique (136') approprié pour la réalisation d'un procédé selon la revendication 1, doté
- de moyens (138') pour la réception d'une spécification d'attribut (166) par le biais d'un réseau (116) à partir d'un système informatique (136) non autorisé, où la spécification d'attribut spécifie au moins un attribut,
- de moyens (142', 144', 146') pour une authentification vis-à-vis d'un jeton d'ID (106),
- de moyens pour la lecture de l'au moins un attribut à partir d'jeton d'ID par le biais d'une connexion sécurisée,
- de moyens pour la retransmission de l'au moins un attribut vers le système informatique non autorisé,
où la lecture de l'au moins un attribut est conditionnée à ce qu'un utilisateur associé au jeton d'ID et le système informatique se soient authentifiés vis-à-vis du jeton d'ID, et
doté de moyens pour la génération d'une requête au niveau de l'utilisateur pour l'authentification vis-à-vis du jeton d'ID en raison de la réception de la spécification d'authentification, où le système informatique contient de préférence en outre des moyens (144) pour la signature de l'au moins un attribut, ce par quoi, l'attribut signé est envoyé.

12. Système informatique selon la revendication 11, doté de plusieurs des certificats (144.1 ; 144.2), les certificats définissant des droits de lecture variables, où le système informatique est conçu pour, en raison de la réception de la spécification d'attribut, choisir au moins un des certificats lequel présente les droits de lecture suffisants pour la lecture des attributs spécifiés dans la spécification d'attribut.
